(19) **Europäisches Patentamt / European Patent Office / Office européen des brevets**

(11) **EP 3 176 970 A1**

(12) **EUROPEAN PATENT APPLICATION**

published in accordance with Art. 153(4) EPC

(43) Date of publication:
07.06.2017 Bulletin 2017/23

(21) Application number: 15836125.3

(22) Date of filing: 13.02.2015

(51) Int Cl.:
*H04L 1/00* $^{(2006.01)}$

(86) International application number:
**PCT/CN2015/073057**

(87) International publication number:
**WO 2016/029667 (03.03.2016 Gazette 2016/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 27.08.2014 CN 201410429018

(71) Applicant: Huawei Technologies Co., Ltd.
**Longgang District
Shenzhen, Guangdong 518129 (CN)**

(72) Inventors:
• ZHAO, Yueying
  **Shenzhen
  Guangdong 518129 (CN)**
• WANG, Zongjie
  **Shenzhen
  Guangdong 518129 (CN)**

(74) Representative: **Pfenning, Meinig & Partner mbB
Patent- und Rechtsanwälte
Theresienhöhe 11a
80339 München (DE)**

(54) **UPLINK DATA TRANSMISSION METHOD AND DEVICE**

(57) Embodiments of the present invention disclose an uplink data transmission method and an apparatus, and relate to the communications field, so as to reduce an uplink transmission data volume and reduce channel overheads. A specific solution is as follows: determining a first bit quantity, where the first bit quantity is a quantity of bits that are on a first channel and that E-DPCCH transmission information can occupy in one timeslot; encoding the E-DPCCH transmission information according to a second bit quantity, the first bit quantity, and frame structure information of the first channel, to obtain E-DPCCH encoded bits, where the second bit quantity is a quantity of bits that the E-DPCCH transmission information occupies before the E-DPCCH transmission information is transmitted through an E-DPCCH and before the E-DPCCH transmission information is encoded; and sending the E-DPCCH encoded bits to a base station through the first channel. The present invention is used in an uplink data transmission process.

User equipment determines a first bit quantity — S101

The user equipment encodes E-DPCCH transmission information according to a second bit quantity, the first bit quantity, and frame structure information of a first channel, to obtain E-DPCCH encoded bits — S102

The user equipment sends the E-DPCCH encoded bits to a base station through the first channel — S103

FIG. 2

EP 3 176 970 A1

**Description**

This application claims priority to Chinese Patent Application No.201410429018.3, filed with the Chinese Patent Office on August 27, 2014, and entitled "UPLINK DATA TRANSMISSION METHOD, AND APPARATUS", which is incorporated herein by reference in its entirety.

**TECHNICAL FIELD**

The present invention relates to the communications field, and in particular, to an uplink data transmission method and an apparatus.

**BACKGROUND**

User equipment (User Equipment, UE) accesses a network through an enhanced random access channel (Enhanced Random Access Channel, E-RACH), to complete a random access process.

In the prior art, when accessing the network through the E-RACH, the user equipment may obtain an enhanced dedicated channel (Enhanced Dedicated Channel, E-DCH) allocated by a base station, and send data to the base station through the E-DCH. A specific process is as follows: The user equipment sends a preamble sequence to the base station through the E-DCH, and after receiving an acquisition indicator (Acquisition Indicator, AI) from the base station, the user equipment may send the data to the base station through the E-DCH. Each user equipment has an E-DCH.

When the user equipment accesses the network through the E-RACH, the user equipment needs to send, to the base station, a dedicated physical control channel (Dedicated physical control Channel, DPCCH) that carries pilot (Pilot) information and power control (Transmit Power Control, TPC) information. In addition, when performing uplink data transmission, the user equipment needs to send, to the base station, both an enhanced dedicated physical data channel (Enhanced Dedicated physical data Channel, E-DPDCH) that carries uplink data and an enhanced dedicated physical control channel (Enhanced Dedicated physical Control Channel, E-DPCCH) that carries control information required for decoding the E-DPDCH. The control information carried by the E-DPCCH includes a transport format combination indicator (Transmission format Combination Indicator, E-TFCI), a retransmission sequence number (Retransmission Sequence Number, RSN), and a happy bit (Happy Bit, HB).

The prior art has at least the following problem: In the prior art, when performing uplink data transmission, each user equipment needs to send the E-DPDCH, the E-DPCCH, and the DPCCH to the base station, causing a relatively large uplink transmission data volume and a relatively large channel overhead.

**SUMMARY**

Embodiments of the present invention provide a data transmission method and an apparatus, so as to resolve a prior-art problem of excessive channel overheads when there is a relatively large quantity of users.

To achieve the foregoing objective, the following technical solutions are used in the embodiments of the present invention:

According to a first aspect, an embodiment of the present invention provides an uplink data transmission method, including:

determining a first bit quantity, where the first bit quantity is a quantity of bits that are on a first channel and that enhanced dedicated physical control channel E-DPCCH transmission information can occupy in one timeslot, the E-DPCCH transmission information includes a transport format combination indicator E-TFCI, and the first channel is used to carry the E-DPCCH transmission information and dedicated physical control channel DPCCH transmission information;

encoding the E-DPCCH transmission information according to a second bit quantity, the first bit quantity, and frame structure information of the first channel, to obtain E-DPCCH encoded bits, where the second bit quantity is a quantity of bits that the E-DPCCH transmission information occupies before the E-DPCCH transmission information is transmitted through an E-DPCCH and before the E-DPCCH transmission information is encoded, and the frame structure information of the first channel includes a quantity of timeslots included in one frame of the first channel; and

sending the E-DPCCH encoded bits to a base station through the first channel, where a quantity of bits that are on the first channel and that the E-DPCCH encoded bits occupy in one timeslot is equal to the first bit quantity.

With reference to the first aspect, in a possible implementation manner, the encoding the E-DPCCH transmission information according to a second bit quantity, the first bit quantity, and frame structure information of the first channel, to obtain E-DPCCH encoded bits includes:

calculating a third bit quantity according to the first bit quantity and the frame structure information of the first channel and with reference to a preset quantity of frames, where the preset quantity of frames is used to indicate a quantity of frames used to send the E-DPCCH encoded bits through the first channel, the third bit quantity is a quantity of bits that are on the first channel and that the E-DPCCH information can occupy in M frames, M is the preset quantity of frames, and M≥1; and

encoding the E-DPCCH transmission information according to the third bit quantity and the second bit quantity, to obtain the E-DPCCH encoded bits.

With reference to the first aspect and the foregoing possible implementation manner, in another possible implementation manner, the sending the E-DPCCH encoded bits to a base station through the first channel includes:

mapping the E-DPCCH encoded bits to each timeslot of the M frames of the first channel according to an encoding sequence, where M is the preset quantity of frames, M≥1, and the preset quantity of frames is used to indicate the quantity of frames used to send the E-DPCCH encoded bits through the first channel; and
separately sending, in each timeslot of the M frames through the first channel, E-DPCCH encoded bits mapped in the timeslot.

With reference to the first aspect and the foregoing possible implementation manners, in another possible implementation manner, the determining a first bit quantity includes:

receiving timeslot format information that is sent by the base station through a broadcast channel, where the timeslot format information includes a timeslot format set, the timeslot format set includes at least one timeslot format that can be used when the user equipment sends the E-RACH to the base station through the first channel, and the timeslot format is used to indicate the quantity of bits that are on the first channel and that the E-DPCCH transmission information can occupy in one timeslot;
determining a first timeslot format from the timeslot format set, where the first timeslot format is a timeslot format used when the user equipment sends the E-RACH to the base station through the first channel; and
determining the first bit quantity according to the first timeslot format.

With reference to the first aspect and the foregoing possible implementation manners, in another possible implementation manner, the timeslot format information further includes a preamble sequence set and a first correspondence, the preamble sequence set includes at least one preamble sequence and a sequence number of the preamble sequence, and the first correspondence is used to indicate a correspondence between the sequence number and the timeslot format; and
the determining a first timeslot format from the timeslot format set includes:

selecting the sequence number from the preamble sequence set, and sending, to the base station, a preamble sequence corresponding to the selected sequence number; and

determining the first timeslot format according to the first correspondence when an acquisition indicator AI is received from the base station, where the first timeslot format is a timeslot format that is in the timeslot format set and corresponding to the selected sequence number.

With reference to the first aspect and the foregoing possible implementation manners, in another possible implementation manner, the timeslot format information further includes a preamble sequence set, a scrambling code set, and a second correspondence, the preamble sequence set includes at least one preamble sequence and a sequence number of the preamble sequence, the scrambling code set includes at least one scrambling code, and the second correspondence is used to indicate a correspondence between the scrambling code and the timeslot format; and
the determining a first timeslot format from the timeslot format set includes:

selecting the sequence number from the preamble sequence set, and selecting a scrambling code from the scrambling code set;
scrambling, by using the selected scrambling code, a preamble sequence corresponding to the selected sequence number;

sending a scrambled preamble sequence to the base station; and

determining the first timeslot format according to the second correspondence when an AI is received from the base station, where the first timeslot format is a timeslot format that is in the timeslot format set and corresponding to the selected scrambling code.

With reference to the first aspect and the foregoing possible implementation manners, in another possible implementation manner, the first timeslot format is further used to indicate a quantity of bits that are on the first channel and that the DPCCH transmission information can occupy in one timeslot; and

the DPCCH transmission information includes a pilot and a transmit power control TPC instruction.

With reference to the first aspect and the foregoing possible implementation manners, in another possible implementation manner, the first channel is further used to carry enhanced dedicated physical data channel E-DPDCH transmission information, and the first timeslot format is further used to indicate a quantity of bits that are on the first channel and that the E-DPDCH transmission information can occupy in one timeslot.

With reference to the first aspect and the foregoing possible implementation manners, in another possible implementation manner, the first channel is a DPCCH.

With reference to the first aspect and the foregoing possible implementation manners, in another possible implementation manner, the E-DPCCH transmission information further includes a retransmission sequence number RSN.

With reference to the first aspect and the foregoing possible implementation manners, in another possible implementation manner, an encoding mode used to encode the E-DPCCH transmission information includes a Reed-Muller RM encoding mode.

According to a second aspect, an embodiment of the present invention provides an uplink data transmission method, including:

determining a first bit quantity, where the first bit quantity is a quantity of bits that are on a first channel and that enhanced dedicated physical control channel E-DPCCH transmission information can occupy in one timeslot, the E-DPCCH transmission information includes a transport format combination indicator E-TFCI, and the first channel is used to carry the E-DPCCH transmission information and dedicated physical control channel DPCCH transmission information;

receiving E-DPCCH encoded bits sent by the user equipment through the first channel; and

decoding the E-DPCCH encoded bits according to the first bit quantity, frame structure information of the first channel, and a second bit quantity, to obtain the E-DPCCH transmission information, where the second bit quantity is a quantity of bits that the E-DPCCH transmission information occupies before the E-DPCCH transmission information is transmitted through an E-DPCCH and before the E-DPCCH transmission information is encoded.

With reference to the second aspect, in a possible implementation manner, the determining a first bit quantity includes:

sending timeslot format information to the user equipment through a broadcast channel, where the timeslot format information includes a timeslot format set, the timeslot format set includes at least one timeslot format that can be used when the user equipment sends the E-RACH to a base station through the first channel, the timeslot format is used to indicate the quantity of bits that are on the first channel and that the E-DPCCH transmission information can occupy in one timeslot, and the E-DPCCH transmission information includes a transport format combination indicator E-TFCI;

determining a first timeslot format from the timeslot format set, where the first timeslot format is a timeslot format used when the user equipment sends the E-RACH to the base station through the first channel; and

determining the first bit quantity according to the first timeslot format.

With reference to the second aspect and the foregoing possible implementation manner, in another possible implementation manner, the timeslot format information further includes a preamble sequence set and a first correspondence, the preamble sequence set includes at least one preamble sequence and a sequence number of the preamble sequence, and the first correspondence is used to indicate a correspondence between the sequence number and the timeslot format; and

the determining a first timeslot format from the timeslot format set includes:

receiving a preamble sequence sent by the user equipment; and

when the received preamble sequence meets a first preset condition, determining, as the first timeslot format according to the first correspondence, a timeslot format that is in the timeslot format set and corresponding to a sequence number of the received preamble sequence, where
the first preset condition is specifically that the received preamble sequence is not allocated to another user equipment.

With reference to the second aspect and the foregoing possible implementation manners, in another possible implementation manner, the timeslot format information further includes a preamble sequence set, a scrambling code set, and a second correspondence, the preamble sequence set includes at least one preamble sequence and a sequence number of the preamble sequence, the scrambling code set includes at least one scrambling code, and the second correspondence is used to indicate a correspondence between the scrambling code and the timeslot format; and
the determining a first timeslot format from the timeslot format set includes:

receiving a scrambled preamble sequence sent by the user equipment; and
attempting to descramble the scrambled preamble sequence to obtain a descrambled preamble sequence, and determining a scrambling code for scrambling the preamble sequence; and
when it is determined, according to the descrambled preamble sequence and the scrambling code for scrambling the preamble sequence, that the scrambled preamble sequence meets a second preset condition, determining, as the first timeslot format according to the second correspondence, a timeslot format that is in the timeslot format set and corresponding to the scrambling code for scrambling the preamble sequence, where
the second preset condition is specifically that the scrambled preamble sequence is not allocated to another user equipment.

With reference to the second aspect and the foregoing possible implementation manners, in another possible implementation manner, after the determining a first timeslot format from the timeslot format set, the method further includes:

sending an acquisition indicator AI to the user equipment, where the AI is used to instruct the user equipment to send the E-RACH to the base station through the first channel by using the first timeslot format.

With reference to the second aspect and the foregoing possible implementation manners, in another possible implementation manner, the decoding the E-DPCCH encoded bits according to the first bit quantity, frame structure information of the first channel, and a second bit quantity, to obtain the E-DPCCH transmission information includes:

calculating a third bit quantity according to the first bit quantity and the frame structure information of the first channel and with reference to a preset quantity of frames, where the preset quantity of frames is used to indicate a quantity of frames used to send the E-DPCCH encoded bits through the first channel, the third bit quantity is a quantity of bits that are on the first channel and that the E-DPCCH information can occupy in M frames, M is the preset quantity of frames, and $M \geq 1$; and

receiving the E-DPCCH encoded bits sent by the user equipment through the first channel, and decoding the E-DPCCH encoded bits according to the third bit quantity and the second bit quantity, to obtain the E-DPCCH transmission information.

With reference to the second aspect and the foregoing possible implementation manners, in another possible implementation manner, a decoding mode used to decode the E-DPCCH transmission information includes a Reed-Muller RM decoding mode.

According to a third aspect, an embodiment of the present invention provides user equipment, including:

a determining unit, configured to determine a first bit quantity, where the first bit quantity is a quantity of bits that are on a first channel and that enhanced dedicated physical control channel E-DPCCH transmission information can occupy in one timeslot, the E-DPCCH transmission information includes a transport format combination indicator E-TFCI, and the first channel is used to carry the E-DPCCH transmission information and dedicated physical control channel DPCCH transmission information;
an encoding unit, configured to encode the E-DPCCH transmission information according to a second bit quantity, the first bit quantity that is determined by the determining unit, and frame structure information of the first channel, to obtain E-DPCCH encoded bits, where the second bit quantity is a quantity of bits that the E-DPCCH transmission information occupies before the E-DPCCH transmission information is transmitted through an E-DPCCH and before the E-DPCCH transmission information is encoded, and the frame structure information of the first channel includes a quantity of timeslots included in one frame of the first channel; and

a sending unit, configured to send, to a base station through the first channel, the E-DPCCH encoded bits obtained after the encoding by the encoding unit, where a quantity of bits that are on the first channel and that the E-DPCCH encoded bits occupy in one timeslot is equal to the first bit quantity.

With reference to the third aspect, in a possible implementation manner, the encoding unit includes:

a calculation subunit, configured to calculate a third bit quantity with reference to a preset quantity of frames and according to the frame structure information of the first channel and the first bit quantity that is determined by the determining unit, where the preset quantity of frames is used to indicate a quantity of frames used to send the E-DPCCH encoded bits through the first channel, the third bit quantity is a quantity of bits that are on the first channel and that the E-DPCCH information can occupy in M frames, M is the preset quantity of frames, and M≥1; and
an encoding subunit, configured to encode the E-DPCCH transmission information according to the second bit quantity and the third bit quantity obtained after the calculation by the calculation subunit, to obtain the E-DPCCH encoded bits.

With reference to the third aspect and the foregoing possible implementation manner, in another possible implementation manner, the user equipment further includes:

a mapping unit, configured to map the E-DPCCH encoded bits obtained after the encoding by the encoding unit to each timeslot of the M frames of the first channel according to an encoding sequence, where M is the preset quantity of frames, M≥1, and the preset quantity of frames is used to indicate the quantity of frames used to send the E-DPCCH encoded bits through the first channel, where
the sending unit is further configured to separately send, in each timeslot of the M frames through the first channel, E-DPCCH encoded bits mapped by the mapping unit in the timeslot.

With reference to the third aspect and the foregoing possible implementation manners, in another possible implementation manner, the user equipment further includes:

a receiving unit, configured to receive timeslot format information that is sent by the base station through a broadcast channel, where the timeslot format information includes a timeslot format set, the timeslot format set includes at least one timeslot format that can be used when the user equipment sends the E-RACH to the base station through the first channel, and the timeslot format is used to indicate the quantity of bits that are on the first channel and that the E-DPCCH transmission information can occupy in one timeslot, where
the determining unit is further configured to: determine a first timeslot format from the timeslot format set received by the receiving unit, where the first timeslot format is a timeslot format used when the user equipment sends the E-RACH to the base station through the first channel; and determine the first bit quantity according to the first timeslot format.

With reference to the third aspect and the foregoing possible implementation manners, in another possible implementation manner, the timeslot format information further includes a preamble sequence set and a first correspondence, the preamble sequence set includes at least one preamble sequence and a sequence number of the preamble sequence, and the first correspondence is used to indicate a correspondence between the sequence number and the timeslot format; and
the user equipment further includes:

a selection unit, configured to select the sequence number from the preamble sequence set, where
the sending unit is further configured to send, to the base station, a preamble sequence corresponding to the selected sequence number;
the receiving unit is further configured to receive an acquisition indicator AI sent by the base station; and
the determining unit is further configured to determine the first timeslot format according to the first correspondence when the receiving unit receives the AI from the base station, where the first timeslot format is a timeslot format that is in the timeslot format set and corresponding to the sequence number selected by the first selection module.

With reference to the third aspect and the foregoing possible implementation manners, in another possible implementation manner, the timeslot format information further includes a preamble sequence set, a scrambling code set, and a second correspondence, the preamble sequence set includes at least one preamble sequence and a sequence number of the preamble sequence, the scrambling code set includes at least one scrambling code, and the second correspondence is used to indicate a correspondence between the scrambling code and the timeslot format; and

the user equipment further includes:

a selection unit, further configured to: select the sequence number from the preamble sequence set, and select a scrambling code from the scrambling code set; and

a scrambling unit, configured to scramble, by using the scrambling code selected by the selection unit, a preamble sequence corresponding to the selected sequence number, where

the sending unit is further configured to send, to the base station, the preamble sequence obtained after the scrambling by the scrambling unit;

the receiving unit is further configured to receive an AI sent by the base station; and

the determining unit is further configured to determine the first timeslot format according to the second correspondence when the AI is received from the base station, where the first timeslot format is a timeslot format that is in the timeslot format set and corresponding to the selected scrambling code.

With reference to the third aspect and the foregoing possible implementation manners, in another possible implementation manner, the first timeslot format is further used to indicate a quantity of bits that are on the first channel and that the DPCCH transmission information can occupy in one timeslot; and
the DPCCH transmission information includes a pilot and a transmit power control TPC instruction.

With reference to the third aspect and the foregoing possible implementation manners, in another possible implementation manner, the first channel is further used to carry enhanced dedicated physical data channel E-DPDCH transmission information, and the first timeslot format is further used to indicate a quantity of bits that are on the first channel and that the E-DPDCH transmission information can occupy in one timeslot.

With reference to the third aspect and the foregoing possible implementation manners, in another possible implementation manner, the first channel is a DPCCH.

With reference to the third aspect and the foregoing possible implementation manners, in another possible implementation manner, the E-DPCCH transmission information further includes a retransmission sequence number RSN.

With reference to the third aspect and the foregoing possible implementation manners, in another possible implementation manner, the encoding unit is further configured to encode the E-DPCCH transmission information by using a Reed-Muller RM encoding mode.

According to a fourth aspect, an embodiment of the present invention provides a base station, including:

a determining unit, configured to determine a first bit quantity, where the first bit quantity is a quantity of bits that are on a first channel and that enhanced dedicated physical control channel E-DPCCH transmission information can occupy in one timeslot, the E-DPCCH transmission information includes a transport format combination indicator E-TFCI, and the first channel is used to carry the E-DPCCH transmission information and dedicated physical control channel DPCCH transmission information;

a receiving unit, configured to receive E-DPCCH encoded bits sent by the user equipment through the first channel; and

a decoding unit, configured to decode, according to the first bit quantity that is determined by the determining unit, frame structure information of the first channel, and a second bit quantity, the E-DPCCH encoded bits received by the receiving unit, to obtain the E-DPCCH transmission information, where the second bit quantity is a quantity of bits that the E-DPCCH transmission information occupies before the E-DPCCH transmission information is transmitted through an E-DPCCH and before the E-DPCCH transmission information is encoded.

With reference to the fourth aspect, in a possible implementation manner, the base station further includes:

a sending unit, configured to send timeslot format information to the user equipment through a broadcast channel, where the timeslot format information includes a timeslot format set, the timeslot format set includes at least one timeslot format that can be used when the user equipment sends the E-RACH to the base station through the first channel, the timeslot format is used to indicate the quantity of bits that are on the first channel and that the E-DPCCH transmission information can occupy in one timeslot, and the E-DPCCH transmission information includes a transport format combination indicator E-TFCI; and

the determining unit is further configured to: determine a first timeslot format from the timeslot format set sent by the sending subunit, where the first timeslot format is a timeslot format used when the user equipment sends the E-RACH to the base station through the first channel; and determine the first bit quantity according to the first timeslot format.

With reference to the fourth aspect and the foregoing possible implementation manner, in another possible implementation manner, the timeslot format information further includes a preamble sequence set and a first correspondence, the preamble sequence set includes at least one preamble sequence and a sequence number of the preamble sequence, and the first correspondence is used to indicate a correspondence between the sequence number and the timeslot format;

the receiving unit is further configured to receive a preamble sequence sent by the user equipment; and the determining unit is further configured to: when the preamble sequence received by the receiving unit meets a first preset condition, determine, as the first timeslot format according to the first correspondence, a timeslot format that is in the timeslot format set and corresponding to a sequence number of the received preamble sequence, where the first preset condition is specifically that the received preamble sequence is not allocated to another user equipment.

With reference to the fourth aspect and the foregoing possible implementation manners, in another possible implementation manner, the timeslot format information further includes a preamble sequence set, a scrambling code set, and a second correspondence, the preamble sequence set includes at least one preamble sequence and a sequence number of the preamble sequence, the scrambling code set includes at least one scrambling code, and the second correspondence is used to indicate a correspondence between the scrambling code and the timeslot format;

the receiving unit is further configured to receive a scrambled preamble sequence sent by the user equipment; and a descrambling unit is configured to: attempt to descramble the scrambled preamble sequence received by the receiving unit, to obtain a descrambled preamble sequence; and determine a scrambling code for scrambling the preamble sequence, where

the determining unit is further configured to: when it is determined, according to the descrambled preamble sequence obtained after the descrambling by the descrambling unit and the scrambling code for scrambling the preamble sequence, that the scrambled preamble sequence meets a second preset condition, determine, as the first timeslot format according to the second correspondence, a timeslot format that is in the timeslot format set and corresponding to the scrambling code for scrambling the preamble sequence, where

the second preset condition is specifically that the scrambled preamble sequence is not allocated to another user equipment.

With reference to the fourth aspect and the foregoing possible implementation manners, in another possible implementation manner, the sending unit is configured to send an acquisition indicator AI to the user equipment after the determining unit determines the first timeslot format from the timeslot format set, where the AI is used to instruct the user equipment to send the E-RACH to the base station through the first channel by using the first timeslot format.

With reference to the fourth aspect and the foregoing possible implementation manners, in another possible implementation manner, the decoding unit includes:

a calculation subunit, configured to calculate a third bit quantity according to the first bit quantity and the frame structure information of the first channel and with reference to a preset quantity of frames, where the preset quantity of frames is used to indicate a quantity of frames used to send the E-DPCCH encoded bits through the first channel, the third bit quantity is a quantity of bits that are on the first channel and that the E-DPCCH information can occupy in M frames, M is the preset quantity of frames, and $M \geq 1$; and

a decoding subunit, configured to decode, according to the second bit quantity and the third bit quantity obtained after the calculation by the calculation subunit, the E-DPCCH encoded bits received by the receiving unit, to obtain the E-DPCCH transmission information.

With reference to the fourth aspect and the foregoing possible implementation manners, in another possible implementation manner, the decoding unit is further configured to decode the E-DPCCH encoded bits by using a Reed-Muller RM decoding mode.

According to the uplink data transmission method and the apparatus that are provided in the embodiments of the present invention, user equipment determines a first bit quantity; encodes E-DPCCH transmission information according to a second bit quantity, the first bit quantity, and frame structure information of a first channel, to obtain E-DPCCH encoded bits; and sends the E-DPCCH encoded bits to a base station through the first channel. In the prior art, each user equipment needs to send an E-DPDCH, an E-DPCCH, and a DPCCH to the base station, thereby causing a relatively large uplink transmission data volume and a relatively large channel overhead. In comparison with the prior art, in this solution, the user equipment does not need to send the E-DPCCH to the base station, but encodes the E-DPCCH transmission information, maps encoded E-DPCCH transmission information (the E-DPCCH encoded bits) to the first channel, and sends the E-DPCCH encoded bits to the base station through the first channel, so as to reduce the channel overhead.

BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of an E-DCH sent by user equipment to a base station in the prior art;

FIG. 2 is a flowchart of an uplink data transmission method according to an embodiment of the present invention;

FIG. 3 is a flowchart of another uplink data transmission method according to an embodiment of the present invention;

FIG. 4A and FIG. 4B are a flowchart of another uplink data transmission method according to an embodiment of the present invention;

FIG. 5 is a schematic diagram of an E-DPDCH and a DPCCH that are sent by user equipment to a base station according to an embodiment of the present invention;

FIG. 6A and FIG. 6B are a flowchart of another uplink data transmission method according to an embodiment of the present invention;

FIG. 7A and FIG. 7B are a flowchart of another uplink data transmission method according to an embodiment of the present invention;

FIG. 8A and FIG. 8B are a flowchart of another uplink data transmission method according to an embodiment of the present invention;

FIG. 9 is a schematic diagram of a first channel sent by user equipment to a base station according to an embodiment of the present invention;

FIG. 10 is a schematic structural diagram of user equipment according to an embodiment of the present invention;

FIG. 11 is a schematic structural diagram of another user equipment according to an embodiment of the present invention;

FIG. 12 is a schematic structural diagram of another user equipment according to an embodiment of the present invention;

FIG. 13 is a schematic structural diagram of another user equipment according to an embodiment of the present invention;

FIG. 14 is a schematic structural diagram of another user equipment according to an embodiment of the present invention;

FIG. 15 is a schematic structural diagram of another user equipment according to an embodiment of the present invention;

FIG. 16 is a schematic structural diagram of another user equipment according to an embodiment of the present invention;

FIG. 17 is a schematic structural diagram of another user equipment according to an embodiment of the present invention;

FIG. 18 is a schematic structural diagram of a base station according to an embodiment of the present invention;

FIG. 19 is a schematic structural diagram of another base station according to an embodiment of the present invention;

FIG. 20 is a schematic structural diagram of another base station according to an embodiment of the present invention;

FIG. 21 is a schematic structural diagram of another base station according to an embodiment of the present invention;

FIG. 22 is a schematic structural diagram of another base station according to an embodiment of the present invention;

FIG. 23 is a schematic structural diagram of another base station according to an embodiment of the present invention; and

FIG. 24 is a schematic structural diagram of an uplink data transmission system according to an embodiment of the present invention.

DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Various technologies described in this specification may be used in various wireless communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, Wideband Code Division Multiple Access (WCDMA, Wideband Code Division Multiple Access Wireless), a Frequency Division Multiple Access (FDMA, Frequency Division Multiple Addressing) system, an orthogonal frequency division multiple access (OFDMA, Orthogonal Frequency-Division Multiple Access) system, a single-carrier FDMA (SC-FDMA) system, a general packet radio service (GPRS, General Packet Radio Service) system, a Long Term Evolution (LTE, Long Term Evolution) system, and another communications system of this type.

This specification describes various aspects with reference to a terminal and/or a base station and/or a base station controller.

User equipment (User Equipment, UE) may be a wireless terminal or may be a wired terminal. The wireless terminal may refer to a device that provides voice and/or data connectivity for a user, a handheld device with a wireless connection function, or another processing device connected to a wireless modem. The wireless terminal may communicate with one or more core networks through a radio access network (RAN, Radio Access Network). The wireless terminal may be a mobile terminal such as a mobile phone (also referred to as a "cellular" phone) and a computer with a mobile terminal, for example, may be a portable, pocket-sized, handheld, computer built-in, or in-vehicle mobile apparatus that exchanges voice and/or data with the radio access network. For example, the wireless terminal may be a device such as a personal communications service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), user equipment (User Device), or user equipment (User Equipment).

The base station (for example, an access point) may be a device that communicates with the wireless terminal by using one or more sectors at an air interface in an access network. The base station may be configured to: mutually convert a received over-the-air frame and an IP packet, and serve as a router between the wireless terminal and a rest part of the access network. The rest part of the access network may include an Internet Protocol (IP) network. The base station may further coordinate attribute management of the air interface. For example, the base station may be a base transceiver station (BTS, Base Transceiver Station) in GSM or CDMA, or may be a NodeB (NodeB) in WCDMA, or may be an evolved NodeB (NodeB, eNB, or e-NodeB, evolutional Node B) in LTE. This is not limited in the present invention.

The base station controller may be a base station controller (BSC, base station controller) in GSM or CDMA, or a radio network controller (RNC, Radio Network Controller) in WCDMA. This is not limited in the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the prior art, a process in which the user equipment accesses a network through an enhanced random access channel (Enhanced Random Access Channel, E-RACH) may include: The base station broadcasts multiple preamble (preamble) numbers to the user equipment; the user equipment randomly selects a preamble number from the multiple preamble numbers broadcasted by the base station, and sends an access request to the base station; if the base station allows the user equipment to access the network, the base station sends, to the user equipment, an indicator that carries an acquisition indicator (Acquisition Indicator, AI) and an enhanced-acquisition indicator (Enhanced Acquisition Indicator, EAI), where the AI is used to indicate whether the user equipment can access the network, and the EAI is used to indicate a resource that can be used by the user equipment; and after receiving an AI indicator used to indicate that the user equipment can access the network, the user equipment may send data to the base station through an enhanced dedicated channel E-DCH.

A conventional E-DCH includes an enhanced dedicated physical data channel (Enhanced Dedicated physical data Channel, E-DPDCH), an enhanced dedicated physical control channel (Enhanced Dedicated physical Control Channel, E-DPCCH), and a dedicated physical control channel (Dedicated physical control Channel, DPCCH). The E-DPDCH is used to transmit and carry uplink data. The DPCCH is used to carry pilot (Pilot) information and power control (Transmit Power Control, TPC) information. The E-DPCCH is used to carry control information required for decoding the E-DPDCH. The control information carried by the E-DPCCH includes a transport format combination indicator (Transmission format Combination Indicator, E-TFCI), a retransmission sequence number (Retransmission Sequence Number, RSN), and a happy bit (Happy Bit, HB).

The E-TFCI is used to notify the base station of a transport format of to-be-transmitted data, and indicate an E-DPDCH data block size (that is, the E-TFCI is used to indicate a data block size of data transmitted through the E-DPDCH), so that the base station may select a corresponding data block size to demodulate the to-be-transmitted data from the E-DPDCH. The RSN is used to notify the base station of a hybrid automatic repeat request (Hybrid Automatic Repeat Request, HARQ) sequence number of a transmission block currently transmitted through the E-DPDCH. For example, RSN=0 during initial transmission, RSN=1 during a first time of retransmission, and RSN=2 during a second time of retransmission. The HB is used to indicate whether the user equipment is happy with current resource configuration. When the user equipment is happy with the current resource configuration, the HB is happy; when the user equipment is unhappy with the current resource configuration, the HB is unhappy.

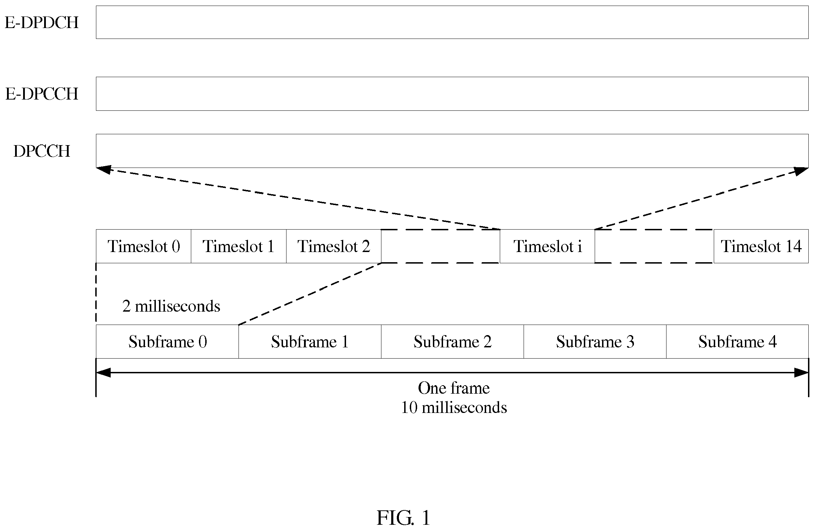

For example, as shown in FIG. 1, a length of one E-DCH frame is 10 milliseconds. Each frame includes 15 timeslots. One frame may be further divided into five subframes. Each subframe includes three timeslots. A length of each subframe is 2 milliseconds. During uplink data transmission, in each timeslot, the user equipment needs to send an E-DPDCH, an E-DPCCH, and a DPCCH to the base station. Certainly, a frame length of one E-DCH frame may be 2 milliseconds. The E-DCH frame length is not limited in the embodiments of the present invention.

**Embodiment 1**

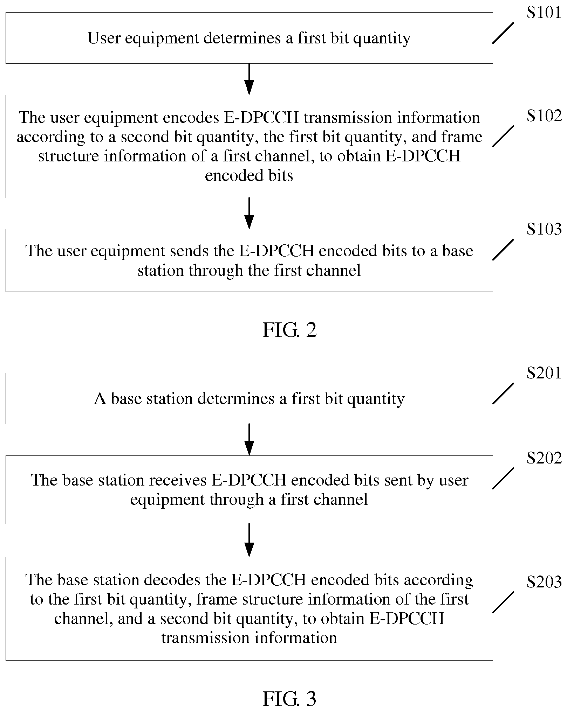

This embodiment of the present invention provides an uplink data transmission method. As shown in FIG. 2, the method includes the following steps.

S101. User equipment determines a first bit quantity.

In this embodiment of the present invention, the first bit quantity is a quantity of bits that are on a first channel and that E-DPCCH transmission information can occupy in one timeslot.

Specifically, the user equipment may determine the first bit quantity according to a first timeslot format. The first timeslot format is a timeslot format used when the user equipment sends an E-RACH to a base station through the first channel. The first timeslot format is used to indicate the quantity of bits that are on the first channel and that the E-DPCCH transmission information can occupy in one timeslot. For example, if the first timeslot format indicates that the E-DPCCH transmission information can occupy 2 bits on the first channel in one timeslot, the first bit quantity is 2. The first channel is used to carry the E-DPCCH transmission information and DPCCH transmission information.

In the prior art, the E-DPCCH transmission information includes an E-TFCI, an RSN, and an HB. The E-TFCI is used to notify the base station of a transport format of to-be-transmitted data, and indicate an E-DPDCH data block size, so that the base station can select a corresponding data block size to demodulate the to-be-transmitted data from an E-DPDCH. If the E-DPCCH transmission information does not include the E-TFCI, the base station cannot determine the E-DPDCH data block size, and then cannot accurately demodulate the to-be-transmitted data from the E-DPDCH. The RSN is used to notify the base station of an HARQ sequence number of a transmission block currently transmitted through the E-DPDCH. When retransmission does not need to be performed, the E-DPCCH transmission information may not include the RSN. The HB is used to indicate whether the user equipment is happy with current resource configuration. If the E-DPCCH transmission information does not include the HB, uplink transmission is slightly affected. Therefore, the E-DPCCH transmission information needs to include the E-TFCI, but the E-DPCCH transmission information may include neither the RSN nor the HB. Therefore, to further reduce channel overheads, the E-DPCCH transmission information in this embodiment of the present invention may include only the E-TFCI. Certainly, if data sent by the user equipment to the base station needs to be retransmitted, the E-DPCCH transmission information may further include the RSN.

For example, in this embodiment of the present invention, the first channel may be a DPCCH, or may be a new channel. Specific content of the first channel is not limited in this embodiment of the present invention. When the first channel is the DPCCH, the user equipment may add the E-DPCCH transmission information to the DPCCH, and send the E-DPCCH transmission information to the base station through the DPCCH. When the first channel is the new channel, the user equipment may add the E-DPCCH transmission information and the DPCCH transmission information to the new channel, and may further add E-DPDCH transmission information to the new channel, so that the user equipment sends the E-DPCCH transmission information, the DPCCH transmission information, and the E-DPDCH transmission information to the base station through the new channel. The DPCCH transmission information may include a pilot and TPC, and the E-DPDCH transmission information may include uplink transmission data.

S102. The user equipment encodes E-DPCCH transmission information according to a second bit quantity, the first bit quantity, and frame structure information of a first channel, to obtain E-DPCCH encoded bits.

The frame structure information of the first channel includes a quantity of timeslots included in one frame of the first channel. For example, when the first channel is a DPCCH, as shown in FIG. 1, one frame of the first channel may include 15 timeslots.

The second bit quantity is used to indicate a quantity of bits that the E-DPCCH transmission information occupies before the E-DPCCH transmission information is transmitted through an E-DPCCH and before the E-DPCCH transmission information is encoded. In the prior art, the E-DPCCH transmission information includes the E-TFCI, the RSN, and the HB. Before the E-DPCCH transmission information is transmitted through the E-DPCCH, the E-DPCCH transmission information before the encoding occupies 10 bits. The E-TFCI occupies 7 bits, the RSN occupies 2 bits, and the HB occupies 1 bit. In the prior art, the 10-bit E-DPCCH transmission information is encoded into 30 bits, and the encoded E-DPCCH transmission information is transmitted by using three timeslots of the E-DPCCH. Each timeslot includes 10 bits of the encoded E-DPCCH transmission information.

In this embodiment of the present invention, if the E-DPCCH transmission information includes only the E-TFCI, the second bit quantity is 7; if the E-DPCCH transmission information includes the E-TFCI and the RSN, the second bit quantity is 9. Further, when the uplink data carried by the E-DPDCH has a relatively simple transport format, the E-TFCI may occupy less than 7 bits of the E-DPCCH in one timeslot. If the E-DPCCH transmission information includes only the E-TFCI, the second bit quantity is an integer that is greater than or equal to 1 and that is less than or equal to 7; if the E-DPCCH transmission information includes the E-TFCI and the RSN, the second bit quantity is an integer that is greater than or equal to 3 and that is less than or equal to 9.

For example, the user equipment encodes the E-DPCCH transmission information according to the second bit quantity, the first bit quantity, and the frame structure information of the first channel, to obtain the E-DPCCH encoded bits. When the second bit quantity is p, and the first bit quantity is q, p-bit E-DPCCH transmission information may be encoded into 15xqxM-bit E-DPCCH encoded bits. M is a preset quantity of frames and is used to indicate a quantity of frames that are used to send the E-DPCCH encoded bits through the first channel, and p, q, and M are positive integers.

S103. The user equipment sends the E-DPCCH encoded bits to a base station through the first channel.

The quantity of bits that are on the first channel and that the E-DPCCH encoded bits occupy in one timeslot is equal to the first bit quantity. The user equipment may send, to the base station by using M frames of the first channel, the encoded bits obtained in S102. The E-DPCCH encoded bits occupy q bits on the first channel in one timeslot.

According to the uplink data transmission method provided in this embodiment of the present invention, user equipment determines a first bit quantity; encodes E-DPCCH transmission information according to a second bit quantity, the first bit quantity, and frame structure information of a first channel, to obtain E-DPCCH encoded bits; and sends the E-DPCCH encoded bits to a base station through the first channel. In the prior art, each user equipment needs to send an E-DPDCH, an E-DPCCH, and a DPCCH to the base station, thereby causing a relatively large uplink transmission data volume and a relatively large channel overhead. In comparison with the prior art, in this solution, the user equipment does not need to send the E-DPCCH to the base station, but encodes the E-DPCCH transmission information, maps encoded E-DPCCH transmission information (the E-DPCCH encoded bits) to the first channel, and sends the E-DPCCH encoded bits to the base station through the first channel, so as to reduce the channel overhead. In addition, in the prior art, the E-DPCCH transmission information includes an E-TFCI, an RSN, and an HB. In comparison with the prior art, the E-DPCCH transmission information in this embodiment of the present invention may include only the E-TFCI, so as to further reduce the channel overhead.

**Embodiment 2**

This embodiment of the present invention provides an uplink data transmission method. As shown in FIG. 3, the method includes the following steps.

S201. A base station determines a first bit quantity.

The first bit quantity is a quantity of bits that are on a first channel and that E-DPCCH transmission information can occupy in one timeslot. The E-DPCCH transmission information includes a transport format combination indicator E-TFCI. The base station may determine the first bit quantity according to a first timeslot format. The first timeslot format is a timeslot format used when the user equipment sends an E-RACH to the base station through the first channel. For specific descriptions about the first bit quantity, the first timeslot format, and the first channel, reference may be made to the related descriptions in the foregoing embodiment. Details are not described herein again in this embodiment of the present invention.

For example, in this embodiment of the present invention, the first channel may be a DPCCH, or may be a new channel. Specific content of the first channel is not limited herein in this embodiment of the present invention.

S202. The base station receives E-DPCCH encoded bits sent by user equipment through a first channel.

The quantity of bits that are on the first channel and that the E-DPCCH encoded bits occupy in one timeslot is equal to the first bit quantity. For specific descriptions about the encoded bits, reference may be made to the related descriptions in the foregoing embodiment. Details are not described herein again in this embodiment of the present invention.

S203. The base station decodes the E-DPCCH encoded bits according to the first bit quantity, frame structure information of the first channel, and a second bit quantity, to obtain E-DPCCH transmission information.

The frame structure information of the first channel includes a quantity of timeslots included in one frame of the first channel. The second bit quantity is used to indicate a quantity of bits that the E-DPCCH transmission information occupies before the E-DPCCH transmission information is transmitted through an E-DPCCH and before the E-DPCCH transmission information is encoded.

Specifically, the base station may calculate a third bit quantity according to the first bit quantity and the frame structure information of the first channel and with reference to a preset quantity of frames. The preset quantity of frames is used to indicate a quantity of frames used to send the E-DPCCH encoded bits through the first channel. The third bit quantity is a quantity of bits that are on the first channel and that the E-DPCCH information can occupy in M frames, M is the preset quantity of frames, and M≥1. The base station receives the E-DPCCH encoded bits sent by the user equipment through the first channel, and decodes the E-DPCCH encoded bits according to the third bit quantity and the second bit quantity by using a decoding mode that is the same as the encoding mode of the user equipment, to obtain the E-DPCCH transmission information.

According to the uplink data transmission method provided in this embodiment of the present invention, a base station determines a first bit quantity; receives E-DPCCH encoded bits sent by user equipment through a first channel; and decodes the E-DPCCH encoded bits according to the first bit quantity, frame structure information of the first channel, and a second bit quantity, to obtain E-DPCCH transmission information. In the prior art, each user equipment needs to send an E-DPDCH, an E-DPCCH, and a DPCCH to the base station, thereby causing a relatively large uplink transmission data volume and a relatively large channel overhead. In comparison with the prior art, in this solution, the user equipment does not need to send the E-DPCCH to the base station, but encodes the E-DPCCH transmission information, maps encoded E-DPCCH transmission information (the E-DPCCH encoded bits) to the first channel, and sends the E-DPCCH encoded bits to the base station through the first channel, so as to reduce the channel overhead.

**Embodiment 3**

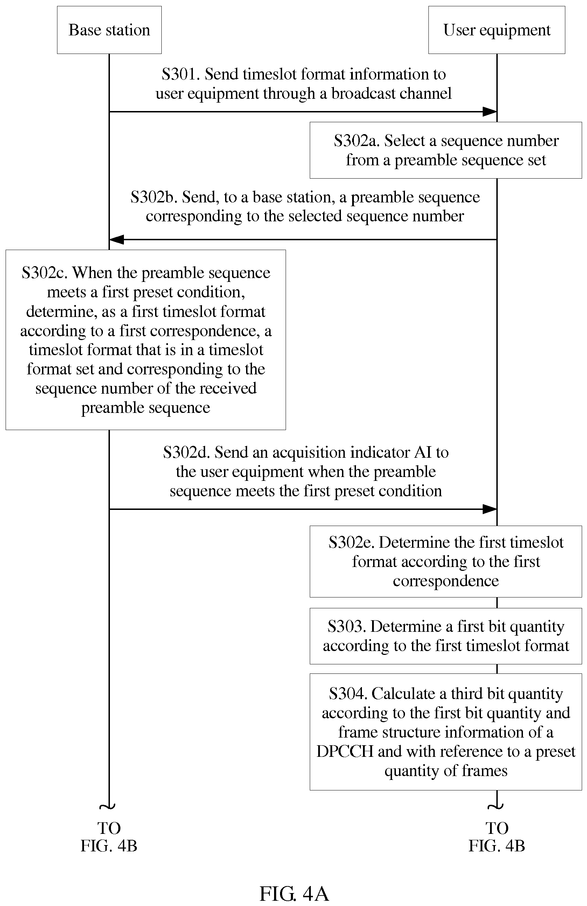

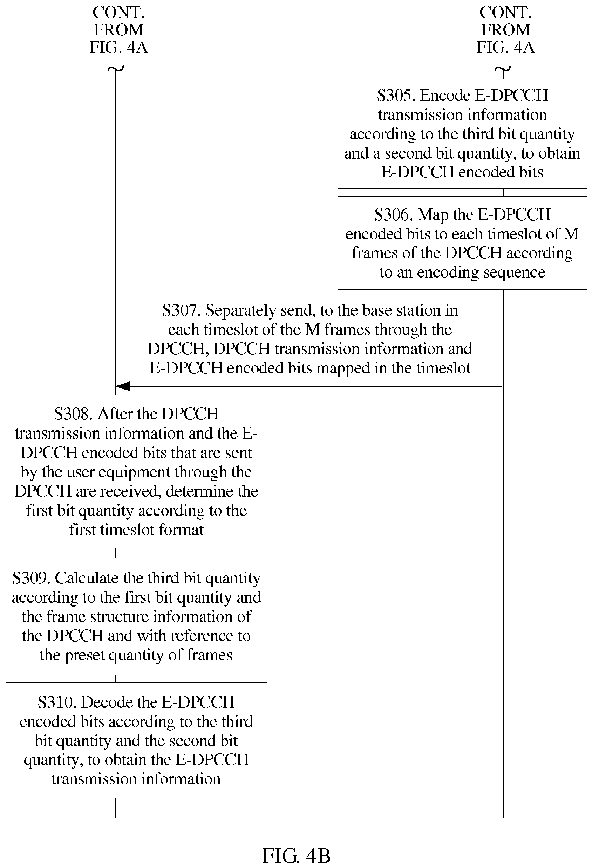

This embodiment of the present invention provides an uplink data transmission method. An example in which a DPCCH serves as a first channel is used for description. As shown in FIG. 4A and FIG. 4B, the method includes the following steps.

S301. A base station sends timeslot format information to user equipment through a broadcast channel.

Specifically, the timeslot format information includes a timeslot format set. The timeslot format set includes at least one timeslot format that can be used when the user equipment sends an E-RACH to the base station through the DPCCH. The timeslot format is used to indicate a quantity of bits that are on the DPCCH and that E-DPCCH transmission information can occupy in one timeslot.

In a first case of this embodiment of the present invention, the timeslot format information further includes a preamble sequence set and a first correspondence. The preamble sequence set includes at least one preamble sequence and a sequence number of the preamble sequence. The first correspondence is used to indicate a correspondence between a sequence number and a timeslot format.

The preamble sequence may be used to implement uplink synchronization of user equipments in a random access process. Multiple sequence numbers may be corresponding to one timeslot format in the timeslot format set. For example, a sequence number n to a sequence number n+i may be corresponding to a timeslot format #k in the timeslot format set, where n, i, and k are positive integers.

The timeslot format may be specifically used to indicate the quantity of bits that are on the DPCCH and that the E-DPCCH transmission information can occupy in one timeslot. Further, the timeslot format may be used to indicate a quantity of bits that are on the DPCCH and that DPCCH transmission information can occupy in one timeslot. In the prior art, there are 10 bits in one timeslot of the DPCCH. The DPCCH transmission information includes a pilot. When power control needs to be performed on the user equipment, the DPCCH transmission information may further include TPC. The E-DPCCH transmission information may include only an E-TFCI. When data sent by the user equipment to the base station needs to be retransmitted, the E-DPCCH transmission information may further include an RSN. A bit that is on the DPCCH and that the E-DPCCH transmission information can occupy in one timeslot is an idle bit of the DPCCH. The idle bit of the DPCCH is a bit that is on the DPCCH and that the DPCCH transmission information does not occupy in one timeslot.

For example, as shown in Table 1, Table 2, and Table 3, Table 1, Table 2, and Table 3 each show optional timeslot formats used when the user equipment sends the E-RACH to the base station through the DPCCH, that is, a timeslot format set. The timeslot format set may be shown in a table manner. Certainly, the timeslot format set may be shown in another manner. A manner in which the timeslot format set is shown is not limited in this embodiment of the present invention.

Because the timeslot format may be used to indicate the quantity of bits that are on the DPCCH and that the E-DPCCH transmission information can occupy in one timeslot, the timeslot format set may be shown in a manner of Table 1.

**Table 1**

| Timeslot format #i | Bits occupied by E-DPCCH transmission information |
| --- | --- |
| 0 | 2 |
| 1 | 1 |

In Table 1, the timeslot format #i may be represented by Slot format #i, and the bits occupied by E-DPCCH transmission information may be represented by $N_{E\text{-}DPCCH}$.

Further, in addition to the quantity of bits that are on the DPCCH and that the E-DPCCH transmission information can occupy in one timeslot, the timeslot format may be further used to indicate the quantity of bits that are on the DPCCH and that the DPCCH transmission information can occupy in one timeslot. Therefore, the timeslot format set may be shown in a manner of Table 2.

**Table 2**

| Timeslot format #i | Bits occupied by a pilot | Bits occupied by TPC | Bits occupied by E-DPCCH transmission information |
| --- | --- | --- | --- |
| 0 | 6 | 2 | 2 |
| 1 | 8 | 0 | 2 |
| 2 | 7 | 2 | 1 |
| 3 | 9 | 0 | 1 |

In Table 2, the timeslot format #i may be represented by Slot format #i, the bits occupied by a pilot may be represented by $N_{pilo}$, the bits occupied by TPC may be represented by $N_{TPC}$, and the bits occupied by E-DPCCH transmission information may be represented by $N_{E\text{-}DPCCH}$.

Further, in addition to the quantity of bits that are on the DPCCH and that the E-DPCCH transmission information can occupy in one timeslot and the quantity of bits that are on the DPCCH and that the DPCCH transmission information can occupy in one timeslot, the timeslot format may be further used to indicate a channel bit rate of the DPCCH, a channel symbol rate of the DPCCH, a spreading factor of the DPCCH, and the like. Therefore, the timeslot format set may be shown in a manner of Table 2.

## Table 3

| Timeslot format #i | Channel bit rate | Channel symbol rate | Spreading factor | Bits/frame | Bits/timeslot | Bits occupied by a pilot | Bits occupied by TPC | Bits occupied by E-DPCCH transmission information | Quantity of timeslots per radio frame |
|---|---|---|---|---|---|---|---|---|---|
| 0 | 15 | 15 | 256 | 150 | 10 | 6 | 2 | 2 | 15 |
| 1 | 15 | 15 | 256 | 150 | 10 | 8 | 0 | 2 | 15 |
| 2 | 15 | 15 | 256 | 150 | 10 | 7 | 2 | 1 | 15 |
| 3 | 15 | 15 | 256 | 150 | 10 | 9 | 0 | 1 | 15 |

In Table 3, the timeslot format #i may be represented by Slot format #i. The bits occupied by a pilot may be represented by $N_{pilo}$. The bits occupied by TPC may be represented by $N_{TPC}$. The bits occupied by E-DPCCH transmission information may be represented by $N_{E\text{-}DPCCH}$. The channel bit rate may be represented by Channel bit rate. A unit of the channel bit rate is kbps. The channel symbol rate may be represented by Channel symbol rate. A unit of the channel symbol rate is ksps. The spreading factor is (spreading factor, SF). The bits/frame may be represented by Bits/frame. The bits/timeslot may be represented by Bits/slots. The quantity of timeslots per radio frame may be represented by Transmitted slots per radio frame. For example, in this embodiment of the present invention, a timeslot format indicated by Timeslot format #2 (Slot format #2) in Table 2 is used as an example for description. The pilot occupies 7 bits on the DPCCH in one timeslot, and the TPC occupies 2 bits on the DPCCH in one timeslot. Because there are 10 bits in one timeslot of the DPCCH, there is 1 idle bit of the DPCCH, that is, the E-DPCCH transmission information can occupy 1 bit on the DPCCH in one timeslot.

Table 1, Table 2, and Table 3 each show only common timeslot formats. Certainly, there may further be another timeslot format. Specific content of the timeslot format set is not limited in this embodiment of the present invention.

S302. The user equipment and the base station determine a first timeslot format from a timeslot format set.

In the first case of this embodiment of the present invention, as shown in FIG. 4A and FIG. 4B, S302 may specifically include S302a to S302e.

S302a. The user equipment selects a sequence number from a preamble sequence set.

S302b. The user equipment sends, to the base station, a preamble sequence corresponding to the selected sequence number.

S302c. When the preamble sequence received by the base station meets a first preset condition, determine, as the first timeslot format according to a first correspondence, a timeslot format that is in the timeslot format set and corresponding to the sequence number of the received preamble sequence.

The first preset condition is specifically that the preamble sequence received by the base station is not allocated to another user equipment. Because the first correspondence is used to indicate the correspondence between a sequence number and a timeslot format, the base station may search the first correspondence according to the sequence number of the received preamble sequence, to obtain the first timeslot format.

S302d. Send an acquisition indicator AI to the user equipment when the preamble sequence received by the base station meets the first preset condition.

The AI is used to instruct the user equipment to send the E-RACH to the base station through the DPCCH by using the first timeslot format.

Further, S302c may be performed before or after S302d. A sequence of S302c and S302d is not limited herein in this embodiment of the present invention.

When the preamble sequence received by the base station does not meet the first preset condition, the base station refuses an access of the user equipment to a network, and S302c to S310 are not performed.

S302e. The user equipment determines the first timeslot format according to the first correspondence.

If the user equipment receives the acquisition indicator AI from the base station, it indicates that the base station allows the user equipment to access the network, and allows the user equipment to send the E-RACH to the base station by using the timeslot format (the first timeslot format) that is in the timeslot format set and corresponding to the selected sequence number. Because the user equipment may obtain the first correspondence according to the received timeslot format information, and the first correspondence is used to indicate the correspondence between a sequence number and a timeslot format, the user equipment may directly search the first correspondence according to the selected sequence number, to determine the first timeslot format.

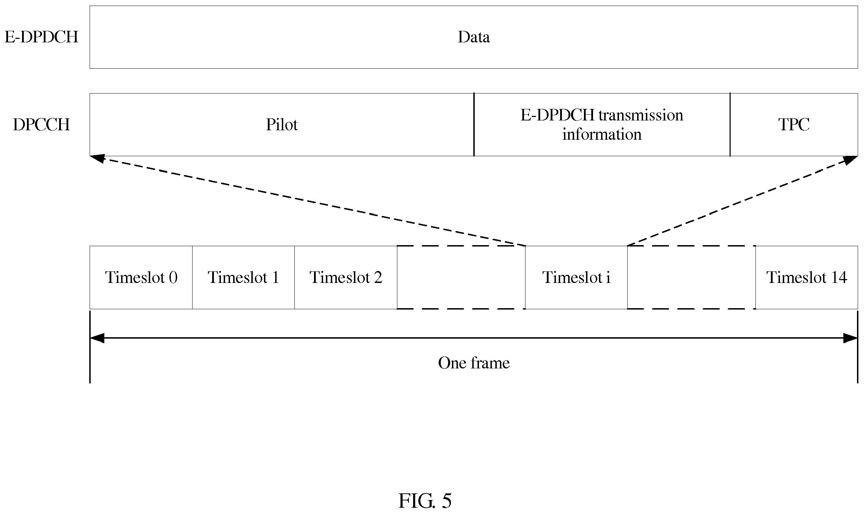

For example, if the user equipment randomly selects a sequence number, and a timeslot format corresponding to the sequence number is the timeslot format indicated by the timeslot format #2 in Table 2, the timeslot format indicated by the timeslot format #2 in Table 2 is the first timeslot format, and the user equipment makes a request to the base station for sending the E-RACH to the base station by using the timeslot format indicated by the timeslot format #2 in Table 2. As shown in FIG. 5, in this case, the user equipment needs to send only an E-DPDCH and a DPCCH to the base station. The E-DPDCH is used to carry uplink data. The DPCCH is used to carry the E-DPCCH transmission information and the DPCCH transmission information.

In a second case of this embodiment of the present invention, the timeslot format information further includes a preamble sequence set, a scrambling code set, and a second correspondence. The preamble sequence set includes at least one preamble sequence and a sequence number of the preamble sequence. The scrambling code set includes at least one scrambling code. The second correspondence is used to indicate a correspondence between a scrambling code and a timeslot format.

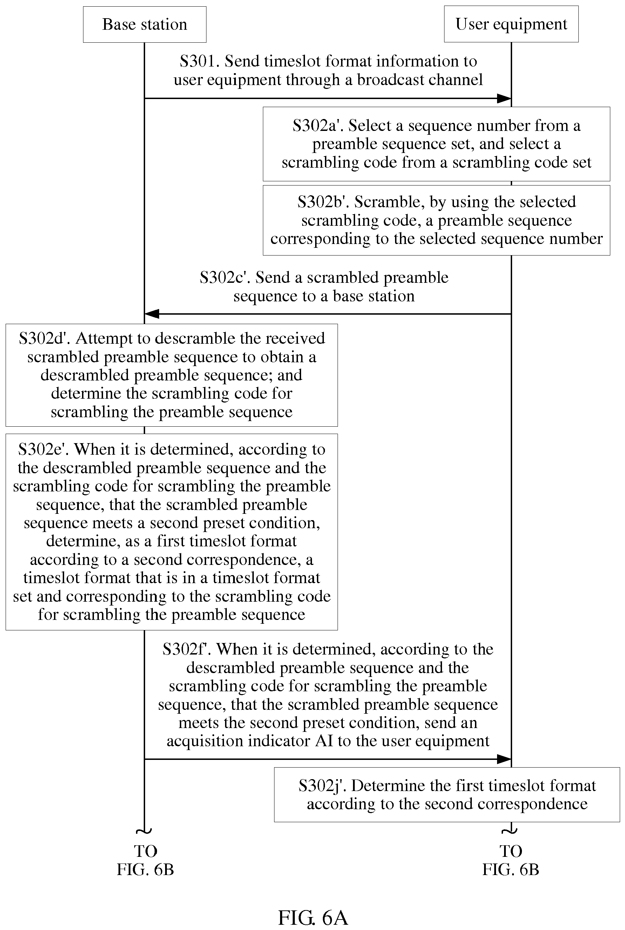

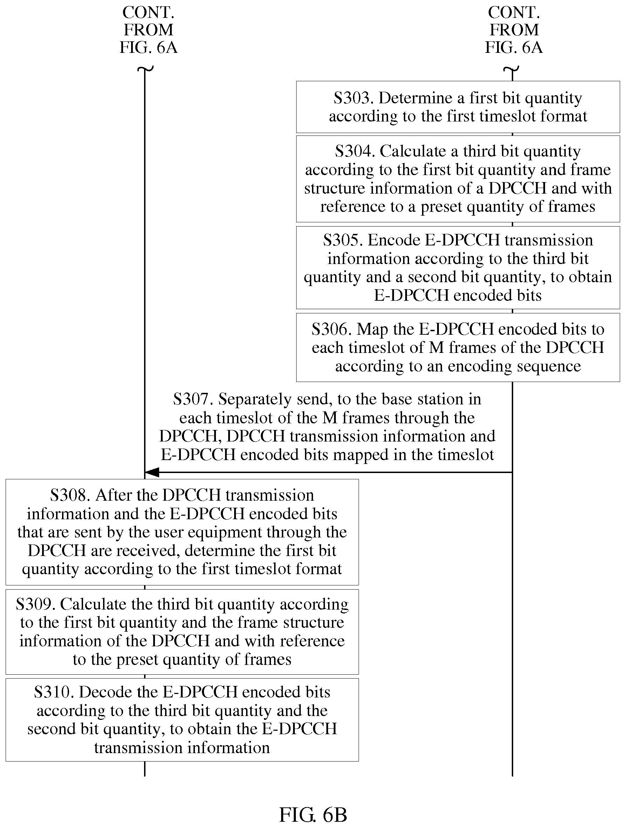

To expand a network capacity, in the second case of this embodiment of the present invention, the user equipment may scramble the preamble sequence by using different scrambling codes. As shown in FIG. 6A and FIG. 6B, S302 may specifically include S302a' to S302j'.

S302a'. The user equipment selects a sequence number from a preamble sequence set, and selects a scrambling code from a scrambling code set.

S302b'. The user equipment scrambles, by using the selected scrambling code, a preamble sequence corresponding to the selected sequence number.

A same preamble sequence is scrambled by using different scrambling codes, so that the same preamble sequence before the scrambling is allocated to different user equipments for use. Therefore, more user equipments can access the network, thereby expanding the network capacity.

S302c'. The user equipment sends a scrambled preamble sequence to the base station.

In the first case, before sending, to the base station, the preamble sequence corresponding to the selected sequence number, the user equipment may scramble the preamble sequence corresponding to the selected sequence number, and then send a scrambled preamble sequence to the base station. However, the preamble sequence in the first case is scrambled by using a scrambling code different from a scrambling code used to scramble the preamble sequence in the second case. In the first case, all user equipments scramble the preamble sequence by using a same scrambling code, and all scrambling codes used to scramble the preamble sequence by all the user equipments are preconfigured for the user equipments by the base station.

S302d'. The base station attempts to descramble the received scrambled preamble sequence to obtain a descrambled preamble sequence, and determines the scrambling code for scrambling the preamble sequence.

The base station may attempt to select a scrambling code from the scrambling code set, and descramble the scrambled preamble sequence by using the selected scrambling code. The base station attempts to descramble the scrambled preamble sequence by using scrambling codes in the scrambling code set one by one. When the base station succeeds in descrambling the scrambled preamble sequence, a selected scrambling code may be determined as the scrambling code for scrambling the preamble sequence.

S302e'. When the base station determines, according to the descrambled preamble sequence and the scrambling code for scrambling the preamble sequence, that the scrambled preamble sequence meets a second preset condition, the base station determines, as the first timeslot format according to a second correspondence, a timeslot format that is in the timeslot format set and corresponding to the scrambling code for scrambling the preamble sequence.

The second preset condition is specifically that the scrambled preamble sequence is not allocated to another user equipment. Because the second correspondence is used to indicate the correspondence between a scrambling code and a timeslot format, the base station may search the second correspondence according to the determined scrambling code for scrambling the preamble sequence, to obtain the first timeslot format.

S302f. When the base station determines, according to the descrambled preamble sequence and the scrambling code for scrambling the preamble sequence, that the scrambled preamble sequence meets the second preset condition, the base station sends an acquisition indicator AI to the user equipment.

The AI is used to instruct the user equipment to send the E-RACH to the base station through the DPCCH by using the first timeslot format.

Further, S302e' may be performed before or after S302f. A sequence of S302e' and S302f is not limited herein in this embodiment of the present invention.

When the preamble sequence received by the base station does not meet the second preset condition, the base station refuses an access of the user equipment to a network, and S302e' to S310 are not performed.

S302j'. The user equipment determines the first timeslot format according to the second correspondence.

If the user equipment receives the acquisition indicator AI from the base station, it indicates that the base station allows the user equipment to access the network, and allows the user equipment to send the E-RACH to the base station by using the timeslot format (the first timeslot format) that is in the timeslot format set and corresponding to the selected scrambling code. Because the user equipment may obtain the second correspondence according to the received timeslot format information, and the second correspondence is used to indicate the correspondence between a scrambling code and a timeslot format, the user equipment may directly search the second correspondence according to the selected scrambling code, to determine the first timeslot format.

S303. The user equipment determines a first bit quantity according to the first timeslot format.

The first bit quantity is determined according to the first timeslot format, and is the quantity of bits that are on the DPCCH and that the E-DPCCH transmission information can occupy in one timeslot. For specific descriptions about the first bit quantity and the first timeslot format, reference may be made to the related descriptions in the foregoing embodiment. Details are not described herein again in this embodiment of the present invention.

For example, if the first timeslot format is the timeslot format indicated by a timeslot format #2 in Table 2, and it can be seen from Table 2 that the E-DPCCH transmission information can occupy 1 bit on the DPCCH, the first bit quantity is 1.

S304. The user equipment calculates a third bit quantity according to the first bit quantity and frame structure information of a DPCCH and with reference to a preset quantity of frames.

The frame structure information of the DPCCH is used to indicate a quantity of timeslots included in one frame of the DPCCH. As shown in FIG. 1, one frame of the DPCCH includes 15 timeslots. The preset quantity of frames is used to indicate a quantity of frames used to send E-DPCCH encoded bits through the DPCCH. The third bit quantity is a quantity of bits that are on the DPCCH and that the E-DPCCH information can occupy in M frames, M is the preset quantity of frames, and M≥1. Third bit quantity = Quantity of timeslots included in one frame of a DPCCH × First bit quantity × Preset quantity of frames.

For example, if the first timeslot format is the timeslot format indicated by the timeslot format #2 in Table 2, the first bit quantity is 1. If the preset quantity of frames is 1, the third bit quantity is 15 (15×1×1). It indicates that the E-DPCCH transmission information may be encoded into 15 bits, and the encoded E-DPCCH transmission information is sent to the base station by using one frame of the DPCCH.

If the first timeslot format is the timeslot format indicated by the timeslot format #2 in Table 2, the first bit quantity is 1. If the preset quantity of frames is 2, the third bit quantity is 30 (15×1×2). It indicates that the E-DPCCH transmission information may be encoded into 30 bits, and the encoded E-DPCCH transmission information is sent to the base station by using two frames of the DPCCH.

If the first timeslot format is a timeslot format indicated by the timeslot format #1 in Table 2, the first bit quantity is 2. If the preset quantity of frames is 2, the third bit quantity is 60 (15×2×2). It indicates that the E-DPCCH transmission information may be encoded into 60 bits, and the encoded E-DPCCH transmission information is sent to the base station by using two frames of the DPCCH.

S305. The user equipment encodes E-DPCCH transmission information according to the third bit quantity and a second bit quantity, to obtain E-DPCCH encoded bits.

The second bit quantity is used to indicate a quantity of bits that the E-DPCCH transmission information occupies before the E-DPCCH transmission information is transmitted through an E-DPCCH and before the E-DPCCH transmission information is encoded. For example, if the E-DPCCH transmission information includes only the E-TFCI, and the E-TFCI occupies 7 bits, the second bit quantity is 7.

An encoding mode used to encode the E-DPCCH transmission information by the user equipment may be a Reed-Muller (Reed-Muller, RM) encoding mode, a convolutional code encoding mode, a Turbo (Turbo) code encoding mode, or the like. Only the RM encoding mode is used as an example for description herein in this embodiment of the present invention.

A formula for encoding the E-DPCCH transmission information by using the RM (Reed-Muller) encoding mode is as follows:

$$z_y = \sum_{x=1}^{X} (b_x \times M_{x,y}) \bmod 2$$

where $b_x$ is the E-DPCCH transmission information, $x = 1, 2, \cdots, X$, and $X$ is the second bit quantity; $z_y$ is the E-DPCCH encoded bits, $y = 1, 2, \cdots, Y$, and $Y$ is the third bit quantity; $M$ is an $RM$ matrix, and a size of the matrix is $X \times Y$. RM ($Y$, $X$) is used to indicate that $X$-bit information is encoded into $Y$-bit information.

For example, when $X$ is 7, and $Y$ is 15, 7-bit E-DPCCH transmission information is encoded into 15-bit E-DPCCH encoded bits by using RM (15, 7), and the E-DPCCH encoded bits may be sent to the base station by using one frame of the DPCCH. An encoding formula is as follows:

$$[z_1, z_2, \ldots, z_{15}] = ([b_1, b_2, b_3, b_4, b_5, b_6, b_7] \begin{bmatrix} M_{1,1} & \cdots & M_{1,15} \\ \vdots & \ddots & \vdots \\ M_{7,1} & \cdots & M_{7,15} \end{bmatrix}) \bmod 2$$

where $[b_1, b_2, b_3, b_4, b_5, b_6, b_7]$ represents the E-DPCCH transmission information before the encoding, and $[z_1, z_2, \ldots, z_{15}]$ represents the encoded E-DPCCH transmission information, that is, the E-DPCCH encoded bits.

Encoding modes of the pilot and the TPC in this embodiment of the present invention are the same as the encoding mode of the DPCCH transmission information in the prior art. Details are not described herein in this embodiment of the present invention.

S306. The user equipment maps the E-DPCCH encoded bits to each timeslot of M frames of the DPCCH according to an encoding sequence.

A quantity of bits that are on the DPCCH and that the E-DPCCH encoded bits occupy in one timeslot is equal to the first bit quantity.

For example, if the E-DPCCH encoded bits are 15 bits, and M=1, the first bit of the E-DPCCH encoded bits is mapped to the first timeslot of one frame of the DPCCH, the second bit of the E-DPCCH encoded bits is mapped to the second timeslot of the frame of the DPCCH, and mapping is successively performed in this sequence until the 15th bit of the E-DPCCH encoded bits is mapped to the 15th timeslot of the frame of the DPCCH.

S307. The user equipment separately sends, to the base station in each timeslot of the M frames through the DPCCH, DPCCH transmission information and E-DPCCH encoded bits mapped in the timeslot.

The DPCCH transmission information may include the pilot, or may include the pilot and the TPC. The timeslot format indicated by the timeslot format #2 in Table 2 is used as an example. A specific process in which the user equipment sends the DPCCH transmission information through the DPCCH to the base station may be separately sending a 6-bit pilot, 2-bit TPC, and a 1-bit E-DPCCH encoded bit in each timeslot of one frame of the DPCCH. Manners of mapping the pilot and the TPC to each timeslot of the DPCCH are the same as mapping manners in the prior art. A specific location sequence of all transmission information in one timeslot of the DPCCH is not limited in this embodiment of the present invention. For example, a specific location sequence of bits occupied by the transmission information may be any one of (pilot, TPC, E-DPCCH), (pilot, E-DPCCH, TPC), (TPC, pilot, E-DPCCH), (TPC, E-DPCCH, pilot), (E-DPCCH, pilot, TCP), or (E-DPCCH, TCP, pilot).

When sending the DPCCH transmission information and the E-DPCCH encoded bits to the base station through the DPCCH, the user equipment may further send the E-DPDCH transmission information.

When sending the DPCCH transmission information, the E-DPCCH encoded bits, and the E-DPDCH to the base station through the DPCCH, the user equipment may perform scrambling according to a scrambling code pre-allocated by the base station. For a specific scrambling manner, reference may be made to a related method in the prior art. Details are not described herein in this embodiment of the present invention.

S308. After receiving the DPCCH transmission information and the E-DPCCH encoded bits that are sent by the user equipment through the DPCCH, the base station determines the first bit quantity according to the first timeslot format.

The first bit quantity is the quantity of bits that are on the DPCCH and that the E-DPCCH transmission information can occupy in one timeslot.

S309. The base station calculates the third bit quantity according to the first bit quantity and the frame structure information of the DPCCH and with reference to the preset quantity of frames.

The frame structure information of the DPCCH is used to indicate the quantity of timeslots included in one frame of the DPCCH. The preset quantity of frames is used to indicate the quantity of frames used to send the E-DPCCH encoded bits through the DPCCH. The third bit quantity is the quantity of bits that are on the DPCCH and that the E-DPCCH information can occupy in the M frames, M is the preset quantity of frames, and $M \geq 1$. Third bit quantity = Quantity of timeslots included in one frame of a DPCCH $\times$ First bit quantity $\times$ Preset quantity of frames.

S310. The base station decodes the E-DPCCH encoded bits according to the third bit quantity and the second bit quantity, to obtain the E-DPCCH transmission information.

The base station decodes the E-DPCCH encoded bits by using a decoding mode that is the same as the encoding mode of the user equipment, to obtain the E-DPCCH transmission information. For example, when the user equipment encodes the E-DPCCH transmission information by using the RM encoding mode, the base station decodes the E-DPCCH encoded bits by using an RM decoding mode. An RM matrix used when the base station decodes the E-DPCCH encoded bits is the same as the RM matrix used when the user equipment encodes the E-DPCCH transmission information. A quantity of rows in the RM matrix is the second bit quantity, and a quantity of columns in the RM matrix is the third bit quantity.

According to the uplink data transmission method provided in this embodiment of the present invention, user equipment determines a first bit quantity; encodes E-DPCCH transmission information according to a second bit quantity, the first bit quantity, and frame structure information of a DPCCH, to obtain E-DPCCH encoded bits; and sends the E-DPCCH encoded bits to a base station through the DPCCH. In the prior art, each user equipment needs to send an E-DPDCH, an E-DPCCH, and the DPCCH to the base station, thereby causing a relatively large uplink transmission data volume and a relatively large channel overhead. In comparison with the prior art, in this solution, the user equipment does not need to send the E-DPCCH to the base station, but encodes the E-DPCCH transmission information, maps encoded E-DPCCH transmission information (the E-DPCCH encoded bits) to the DPCCH, and sends the E-DPCCH encoded bits and DPCCH transmission information to the base station through the DPCCH, so as to reduce the channel overhead. In addition, in the prior art, the E-DPCCH transmission information includes an E-TFCI, an RSN, and an HB. In comparison with the prior art, the E-DPCCH transmission information in this embodiment of the present invention may include only the E-TFCI, so as to further reduce the channel overhead.

**Embodiment 4**

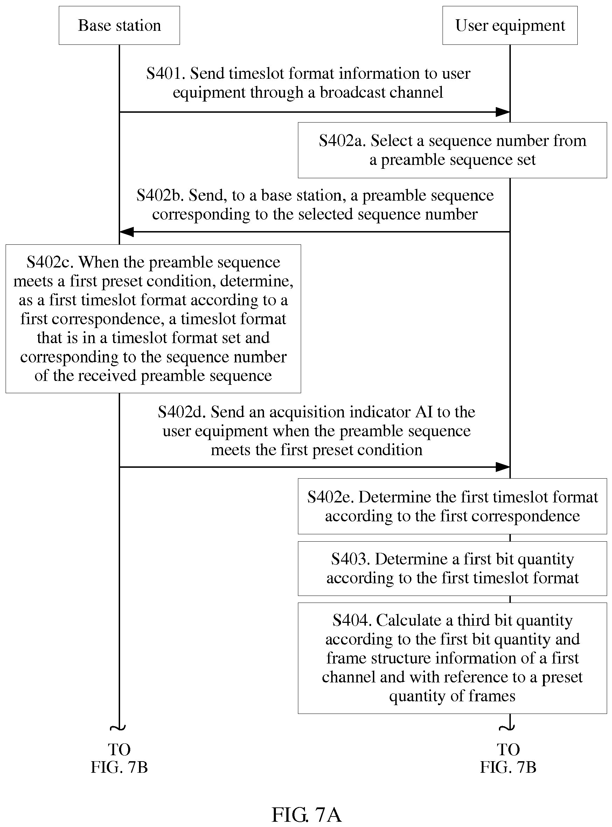

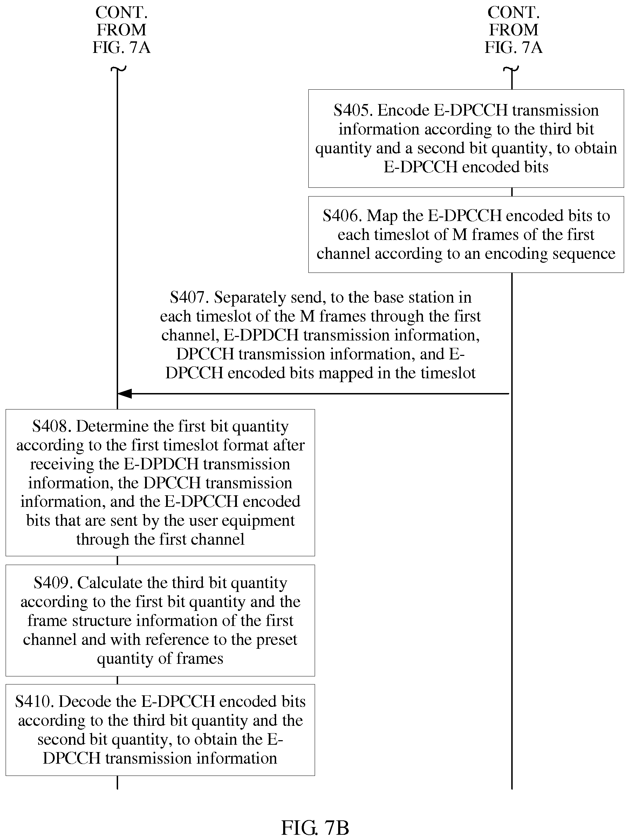

This embodiment of the present invention provides an uplink data transmission method. As shown in FIG. 7A and FIG. 7B, the method includes the following steps.

S401. A base station sends timeslot format information to user equipment through a broadcast channel.

Specifically, the timeslot format information includes a timeslot format set. The timeslot format set includes at least one timeslot format that can be used when the user equipment sends an E-RACH to the base station through a first channel. The timeslot format is used to indicate a quantity of bits that are on the first channel and that E-DPCCH transmission information can occupy in one timeslot. The first channel is used to carry the E-DPCCH transmission information, DPCCH transmission information, and E-DPDCH transmission information.

In this embodiment of the present invention, the first channel is a new channel different from an E-DPCCH, a DPCCH, and an E-DPDCH. The timeslot format may be specifically used to indicate a quantity of bits that are on the first channel and that each of the E-DPCCH transmission information, the DPCCH transmission information, and the E-DPDCH transmission information can occupy in one timeslot.

The E-DPCCH transmission information may include only an E-TFCI. When data sent by the user equipment to the base station needs to be retransmitted, the E-DPCCH transmission information may further include an RSN. The DPCCH transmission information includes a pilot. When power control needs to be performed on the user equipment, the DPCCH transmission information may further include TPC. The E-DPDCH transmission information includes uplink transmission data.

The E-DPCCH transmission information and the DPCCH transmission information can together occupy 10 bits on the first channel in one timeslot. A quantity of bits in one timeslot of the first channel is related to a spreading factor.

Different spreading factors are corresponding to different quantities of bits in one timeslot of the first channel. A bit that is on the first channel and that the E-DPDCH transmission information can occupy in one timeslot is an idle bit on the first channel (that is, a bit that is on the first channel and that the E-DPCCH transmission information and the DPCCH transmission information do not occupy in one timeslot).

For example, as shown in Table 4 and Table 5, Table 4 and Table 5 each show optional timeslot formats used when the user equipment sends the E-RACH to the base station through the first channel, that is, a timeslot format set. The timeslot format set may be shown in a table manner. Certainly, the timeslot format set may be shown in another manner. A manner in which the timeslot format set is shown is not limited in this embodiment of the present invention.

Because the timeslot format may be used to indicate the quantity of bits that are on the first channel and that each of the E-DPCCH transmission information, the DPCCH transmission information, and the E-DPDCH transmission information can occupy in one timeslot, the timeslot format set may be shown in a manner of Table 4.

Table 4

| Timeslot format | Bits occupied by E-DPDCH transmission information | Bits occupied by an E-DPCCH/a DPCCH | | |
|---|---|---|---|---|
| | | Bits occupied by E-DPCCH transmission information | Bits occupied by a pilot | Bits occupied by TPC |
| 0 | 10 | 2 | 8 | 0 |
| 1 | 30 | 2 | 8 | 0 |
| 2 | 70 | 2 | 8 | 0 |
| 3 | 150 | 2 | 8 | 0 |
| 4 | 310 | 2 | 8 | 0 |
| 5 | 630 | 2 | 8 | 0 |
| 6 | 10 | 2 | 6 | 2 |
| 7 | 30 | 2 | 6 | 2 |
| 8 | 70 | 2 | 6 | 2 |
| 9 | 150 | 2 | 6 | 2 |
| 10 | 310 | 2 | 6 | 2 |
| 11 | 630 | 2 | 6 | 2 |
| 12 | 10 | 1 | 7 | 2 |
| 13 | 30 | 1 | 7 | 2 |
| 14 | 70 | 1 | 7 | 2 |
| 15 | 150 | 1 | 7 | 2 |
| 16 | 310 | 1 | 7 | 2 |
| 17 | 630 | 1 | 7 | 2 |

In Table 4, the timeslot format #i may be represented by Slot format #i, the bits occupied by a pilot may be represented by $N_{pilo}$, the bits occupied by E-DPDCH transmission information may be represented by $N_{E\text{-}DPDCH}$, the bits occupied by TPC may be represented by $N_{TPC}$, and the bits occupied by E-DPCCH transmission information may be represented by $N_{E\text{-}DPCCH}$.

Further, in addition to the quantity of bits that are on the first channel and that each of the E-DPCCH transmission information, the DPCCH transmission information, and the E-DPDCH transmission information can occupy in one timeslot, the timeslot format may be further used to indicate a channel bit rate of the first channel, a channel symbol rate of the first channel, a spreading factor of the first channel, and the like. Therefore, the timeslot format set may be shown in a manner of Table 5.

## Table 5

| Timeslot format | Channel bit rate | Channel symbol rate | Spreading factor | Bits/timeslot | Bits occupied by E-DPDCH transmission information | Bits occupied by an E-DPCCH/a DPCCH | | Bits occupied by a pilot | Bits occupied by TPC | Quantity of timeslots per radio frame |
|---|---|---|---|---|---|---|---|---|---|---|
| | | | | | | Bits occupied by E-DPCCH transmission information | | | | |
| 0 | 30 | 30 | 128 | 20 | 10 | 2 | | 8 | 0 | 15 |
| 1 | 60 | 60 | 64 | 40 | 30 | 2 | | 8 | 0 | 15 |
| 2 | 120 | 120 | 32 | 80 | 70 | 2 | | 8 | 0 | 15 |
| 3 | 240 | 240 | 16 | 160 | 150 | 2 | | 8 | 0 | 15 |
| 4 | 480 | 480 | 8 | 320 | 310 | 2 | | 8 | 0 | 15 |
| 5 | 960 | 960 | 4 | 640 | 630 | 2 | | 8 | 0 | 15 |
| 6 | 30 | 30 | 128 | 20 | 10 | 2 | | 6 | 2 | 15 |
| 7 | 60 | 60 | 64 | 40 | 30 | 2 | | 6 | 2 | 15 |
| 8 | 120 | 120 | 32 | 80 | 70 | 2 | | 6 | 2 | 15 |
| 9 | 240 | 240 | 16 | 160 | 150 | 2 | | 6 | 2 | 15 |
| 10 | 480 | 480 | 8 | 320 | 310 | 2 | | 6 | 2 | 15 |
| 11 | 960 | 960 | 4 | 640 | 630 | 2 | | 6 | 2 | 15 |
| 12 | 30 | 30 | 128 | 20 | 10 | 1 | | 7 | 2 | 15 |
| 13 | 60 | 60 | 64 | 40 | 30 | 1 | | 7 | 2 | 15 |
| 14 | 120 | 120 | 32 | 80 | 70 | 1 | | 7 | 2 | 15 |
| 15 | 240 | 240 | 16 | 160 | 150 | 1 | | 7 | 2 | 15 |
| 16 | 480 | 480 | 8 | 320 | 310 | 1 | | 7 | 2 | 15 |

| 17 | 960 | 960 | 4 | 640 | 630 | 1 | | 7 | 2 | 15 |
| --- | --- | --- | --- | --- | --- | --- | --- | --- | --- | --- |

In Table 5, the timeslot format #i may be represented by Slot format #i. The bits occupied by a pilot may be represented by $N_{pilo}$. The bits occupied by E-DPDCH transmission information may be represented by $N_{E-DPDCH}$. The bits occupied by TPC may be represented by $N_{TPC}$. The bits occupied by E-DPCCH transmission information may be represented by $N_{E-DPCCH}$. The channel bit rate may be represented by Channel bit rate. A unit of the channel bit rate is kbps. The channel symbol rate may be represented by Channel symbol rate. A unit of the channel symbol rate is ksps. The spreading factor is (spreading factor, SF). The bits/frame may be represented by Bits/frame. The bits/timeslot may be represented by Bits/slots. The quantity of timeslots per radio frame may be represented by Transmitted slots per radio frame.

For example, in this embodiment of the present invention, a timeslot format indicated by the timeslot format #6 in Table 5 is used as an example for description. The spreading factor is 128, and there are 20 bits in one timeslot of the corresponding first channel. The E-DPCCH transmission information occupies 2 bits on the first channel in one timeslot. The pilot occupies 6 bits on the first channel in one timeslot. The TPC occupies 2 bits on the first channel in one timeslot. Because there are 20 bits in one timeslot of the first channel, there are 10 idle bits on the first channel, that is, the E-DPDCH transmission information can occupy 10 bits on the first channel in one timeslot.

Table 4 and Table 5 each show only common timeslot formats. Certainly, there may further be another timeslot format. Specific content of the timeslot format is not limited in this embodiment of the present invention.

In a first case of this embodiment of the present invention, the timeslot format information further includes a preamble sequence set and a first correspondence. The preamble sequence set includes at least one preamble sequence and a sequence number of the preamble sequence. The first correspondence is used to indicate a correspondence between a sequence number and a timeslot format.

S402. The user equipment and the base station determine a first timeslot format from a timeslot format set.

In the first case of this embodiment of the present invention, as shown in FIG. 7 A and FIG. 7B, S402 may specifically include S402a to S402e.

S402a. The user equipment selects a sequence number from a preamble sequence set.

S402b. The user equipment sends, to the base station, a preamble sequence corresponding to the selected sequence number.

S402c. When the preamble sequence received by the base station meets a first preset condition, determine, as the first timeslot format according to a first correspondence, a timeslot format that is in the timeslot format set and corresponding to the sequence number of the received preamble sequence.

The first preset condition is specifically that the preamble sequence received by the base station is not allocated to another user equipment. Because the first correspondence is used to indicate the correspondence between a sequence number and a timeslot format, the base station may search the first correspondence according to the sequence number of the received preamble sequence, to obtain the first timeslot format.

S402d. Send an acquisition indicator AI to the user equipment when the preamble sequence received by the base station meets the first preset condition.

The AI is used to instruct the user equipment to send the E-RACH to the base station through the first channel by using the first timeslot format.

Further, S402c may be performed before or after S402d. A sequence of S402c and S402d is not limited herein in this embodiment of the present invention.

When the preamble sequence received by the base station does not meet the first preset condition, the base station refuses an access of the user equipment to a network, and S402c to S410 are not performed.

S402e. The user equipment determines the first timeslot format according to the first correspondence.

If the user equipment receives the acquisition indicator AI from the base station, it indicates that the base station allows the user equipment to access the network, and allows the user equipment to send the E-RACH to the base station by using the timeslot format (the first timeslot format) that is in the timeslot format set and corresponding to the selected sequence number. Because the user equipment may obtain the first correspondence according to the received timeslot format information, and the first correspondence is used to indicate the correspondence between a sequence number and a timeslot format, the user equipment may directly search the first correspondence according to the selected sequence number, to determine the first timeslot format.

In a second case of this embodiment of the present invention, the timeslot format information further includes a preamble sequence set, a scrambling code set, and a second correspondence. The preamble sequence set includes at least one preamble sequence and a sequence number of the preamble sequence. The scrambling code set includes at least one scrambling code. The second correspondence is used to indicate a correspondence between a scrambling code and a timeslot format.

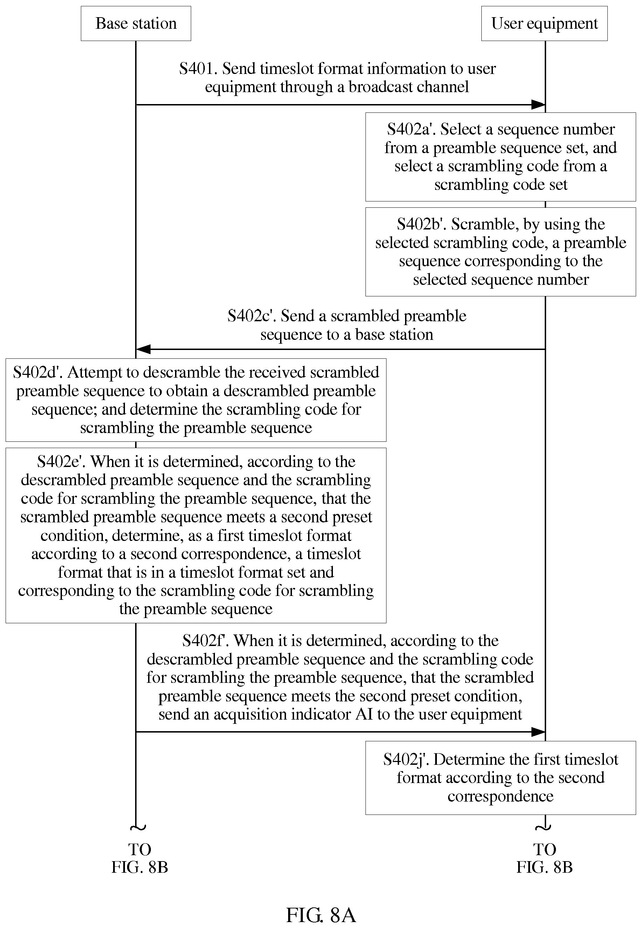

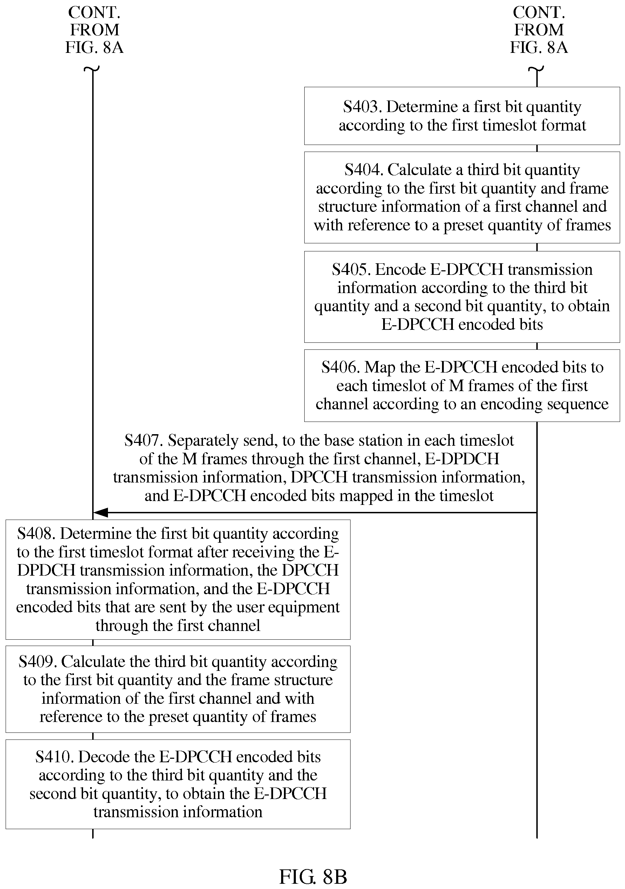

To expand a network capacity, in the second case of this embodiment of the present invention, the user equipment may scramble the preamble sequence by using different scrambling codes. As shown in FIG. 8A and FIG. 8B, S402 may specifically include S402a' to S402j'.

S402a'. The user equipment selects a sequence number from a preamble sequence set, and selects a scrambling code from a scrambling code set.

S402b'. The user equipment scrambles, by using the selected scrambling code, a preamble sequence corresponding to the selected sequence number.

A same preamble sequence is scrambled by using different scrambling codes, so that the same preamble sequence before the scrambling is allocated to different user equipments for use. Therefore, more user equipments can access the network, thereby expanding the network capacity.

S402c'. The user equipment sends a scrambled preamble sequence to the base station.

In the first case, before sending, to the base station, the preamble sequence corresponding to the selected sequence number, the user equipment may scramble the preamble sequence corresponding to the selected sequence number, and then send a scrambled preamble sequence to the base station. However, the preamble sequence in the first case is scrambled by using a scrambling code different from a scrambling code used to scramble the preamble sequence in the second case. In the first case, all user equipments scramble the preamble sequence by using a same scrambling code, and all scrambling codes used to scramble the preamble sequence by all the user equipments are preconfigured for the user equipments by the base station.

S402d'. The base station attempts to descramble the received scrambled preamble sequence to obtain a descrambled preamble sequence, and determines the scrambling code for scrambling the preamble sequence.

The base station may attempt to select a scrambling code from the scrambling code set, and descramble the scrambled preamble sequence by using the selected scrambling code. The base station attempts to descramble the scrambled preamble sequence by using scrambling codes in the scrambling code set one by one. When the base station succeeds in descrambling the scrambled preamble sequence, a selected scrambling code may be determined as the scrambling code for scrambling the preamble sequence.

S402e'. When the base station determines, according to the descrambled preamble sequence and the scrambling code for scrambling the preamble sequence, that the scrambled preamble sequence meets a second preset condition, the base station determines, as the first timeslot format according to a second correspondence, a timeslot format that is in the timeslot format set and corresponding to the scrambling code for scrambling the preamble sequence.

The second preset condition is specifically that the scrambled preamble sequence is not allocated to another user equipment. Because the second correspondence is used to indicate the correspondence between a scrambling code and a timeslot format, the base station may search the second correspondence according to the determined scrambling code for scrambling the preamble sequence, to obtain the first timeslot format.

S402f. When the base station determines, according to the descrambled preamble sequence and the scrambling code for scrambling the preamble sequence, that the scrambled preamble sequence meets the second preset condition, the base station sends an acquisition indicator AI to the user equipment.

The AI is used to instruct the user equipment to send the E-RACH to the base station through the first channel by using the first timeslot format.

Further, S402e' may be performed before or after S402f'. A sequence of S402e' and S402f is not limited herein in this embodiment of the present invention.

When the preamble sequence received by the base station does not meet the second preset condition, the base station refuses an access of the user equipment to a network, and S402e' to S410 are not performed.

S402j'. The user equipment determines the first timeslot format according to the second correspondence.

If the user equipment receives the acquisition indicator AI from the base station, it indicates that the base station allows the user equipment to access the network, and allows the user equipment to send the E-RACH to the base station by using the timeslot format (the first timeslot format) that is in the timeslot format set and corresponding to the selected scrambling code. Because the user equipment may obtain the second correspondence according to the received timeslot format information, and the second correspondence is used to indicate the correspondence between a scrambling code and a timeslot format, the user equipment may directly search the second correspondence according to the selected scrambling code, to determine the first timeslot format.

S403. The user equipment determines a first bit quantity according to the first timeslot format.

The first bit quantity is determined according to the first timeslot format, and is the quantity of bits that are on the first channel and that the E-DPCCH transmission information can occupy in one timeslot. For specific descriptions about the first bit quantity, the first timeslot format, and the first channel, reference may be made to the related descriptions in the foregoing embodiment. Details are not described herein again in this embodiment of the present invention.

For example, if the first timeslot format is the timeslot format indicated by the timeslot format #6 in Table 5, and it can be seen from Table 5 that the E-DPCCH can occupy 2 bits on the DPCCH, the first bit quantity is 2.

S404. The user equipment calculates a third bit quantity according to the first bit quantity and frame structure information of a first channel and with reference to a preset quantity of frames.

The frame structure information of the first channel is used to indicate a quantity of timeslots included in one frame of the first channel. In this embodiment of the present invention, one frame of the first channel includes 15 timeslots. The preset quantity of frames is used to indicate a quantity of frames used to send E-DPCCH encoded bits through the first channel. The third bit quantity is a quantity of bits that are on the first channel and that the E-DPCCH information can occupy in M frames, M is the preset quantity of frames, and $M \geq 1$.

S405. The user equipment encodes E-DPCCH transmission information according to the third bit quantity and a second bit quantity, to obtain E-DPCCH encoded bits.

Specifically, for a method for encoding the E-DPCCH transmission information, reference may be made to the related descriptions in another method embodiment of the present invention.

Manners of encoding the E-DPDCH transmission information, the pilot, and the TPC in this embodiment of the present invention are the same as encoding modes in the prior art. Details are not described herein in this embodiment of the present invention.

S406. The user equipment maps the E-DPCCH encoded bits to each timeslot of M frames of the first channel according to an encoding sequence.

A quantity of bits that are on the first channel and that the E-DPCCH encoded bits occupy in one timeslot is equal to the first bit quantity.

For example, if the E-DPCCH encoded bits are 30 bits, and M=1, the first two bits of the E-DPCCH encoded bits are mapped to the first timeslot of one frame of the first channel, the third bit and the fourth bit that are of the E-DPCCH encoded bits are mapped to the second timeslot of the frame of the first channel, and mapping is successively performed in this sequence until the $29^{th}$ bit and the $30^{th}$ bit that are of the E-DPCCH encoded bits are mapped to the $15^{th}$ timeslot of the frame of the first channel.

S407. The user equipment separately sends, to the base station in each timeslot of the M frames through the first channel, E-DPDCH transmission information, DPCCH transmission information, and E-DPCCH encoded bits mapped in the timeslot.

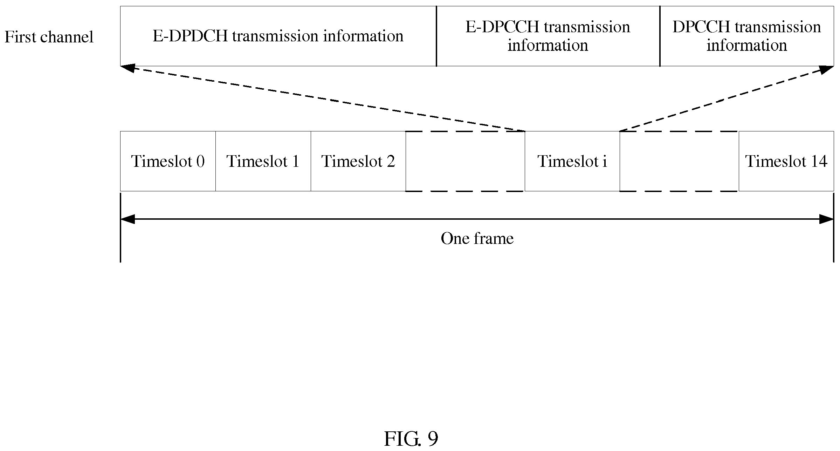

The E-DPDCH transmission information includes the uplink transmission data. The DPCCH transmission information may include the pilot, or may include the pilot and the TPC. As shown in FIG. 9, the user equipment does not need to send an E-DPDCH, an E-DPCCH, and a DPCCH to the base station, but only needs to send the first channel to the base station.

The timeslot format indicated by the timeslot format #6 in Table 5 is used as an example, and 10-bit E-DPDCH transmission information, 2-bit E-DPCCH encoded bits, a 6-bit pilot, and 2-bit TPC are separately sent in each timeslot of one frame of the first channel. Manners of mapping the E-DPDCH transmission information, the pilot, and the TPC to each timeslot of the DPCCH are the same as mapping manners in the prior art. A specific location sequence of all transmission information in one timeslot of the first channel is not limited in this embodiment of the present invention. For example, a specific location sequence of bits occupied by the transmission information may be any one of (E-DPCCH, DPCCH, E-DPDCH), (E-DPCCH, E-DPDCH, DPCCH), (DPCCH, E-DPCCH, E-DPDCH), (DPCCH, E-DPDCH, E-DPCCH), (E-DPDCH, DPCCH, E-DPCCHP), or (E-DPDCH, E-DPCCH, DPCCH).

When sending the E-DPDCH transmission information, the DPCCH transmission information, and the E-DPCCH encoded bits to the base station through the first channel, the user equipment may perform scrambling according to a scrambling code pre-allocated by the base station. For a specific scrambling manner, reference may be made to a related method in the prior art. Details are not described herein in this embodiment of the present invention.

S408. After receiving the E-DPDCH transmission information, the DPCCH transmission information, and the E-DPCCH encoded bits that are sent by the user equipment through the first channel, the base station determines the first bit quantity according to the first timeslot format.

The first bit quantity is the quantity of bits that are on the first channel and that the E-DPCCH transmission information can occupy in one timeslot.

S409. The base station calculates the third bit quantity according to the first bit quantity and the frame structure information of the first channel and with reference to the preset quantity of frames.

The frame structure information of the first channel is used to indicate the quantity of timeslots included in one frame of the first channel. The preset quantity of frames is used to indicate the quantity of frames used to send the E-DPCCH encoded bits through the first channel. The third bit quantity is the quantity of bits that are on the first channel and that the E-DPCCH information can occupy in the M frames, M is the preset quantity of frames, and M≥1. Third bit quantity = Quantity of timeslots included in one frame of a first channel × First bit quantity × Preset quantity of frames.

S410. The base station decodes the E-DPCCH encoded bits according to the third bit quantity and the second bit quantity, to obtain the E-DPCCH transmission information.

The base station decodes the E-DPCCH encoded bits by using a decoding mode that is the same as the encoding mode of the user equipment, to obtain the E-DPCCH transmission information. For example, when the user equipment encodes the E-DPCCH transmission information by using the RM encoding mode, the base station decodes the E-DPCCH encoded bits by using an RM decoding mode. An RM matrix used when the base station decodes the E-DPCCH encoded bits is the same as the RM matrix used when the user equipment encodes the E-DPCCH transmission information. A quantity of rows in the RM matrix is the second bit quantity, and a quantity of columns in the RM matrix is the third bit quantity.

According to the uplink data transmission method provided in this embodiment of the present invention, user equipment determines a first bit quantity; encodes E-DPCCH transmission information according to a second bit quantity, the first bit quantity, and frame structure information of a DPCCH, to obtain E-DPCCH encoded bits; and sends the E-DPCCH encoded bits to a base station through a first channel. In the prior art, each user equipment needs to send an E-DPDCH, an E-DPCCH, and the DPCCH to the base station, thereby causing a relatively large uplink transmission data volume and a relatively large channel overhead. In comparison with the prior art, in this solution, the user equipment does not need to send the E-DPCCH to the base station, but encodes the E-DPCCH transmission information, maps encoded E-DPCCH transmission information (the E-DPCCH encoded bits) to the first channel, and sends the E-DPCCH encoded bits, E-DPDCH transmission information, and DPCCH transmission information to the base station through the first channel, so as to reduce the channel overhead. In addition, in the prior art, the E-DPCCH transmission information includes an E-TFCI, an RSN, and an HB. In comparison with the prior art, the E-DPCCH transmission information in this embodiment of the present invention may include only the E-TFCI, so as to further reduce the channel overhead.

Embodiment 5

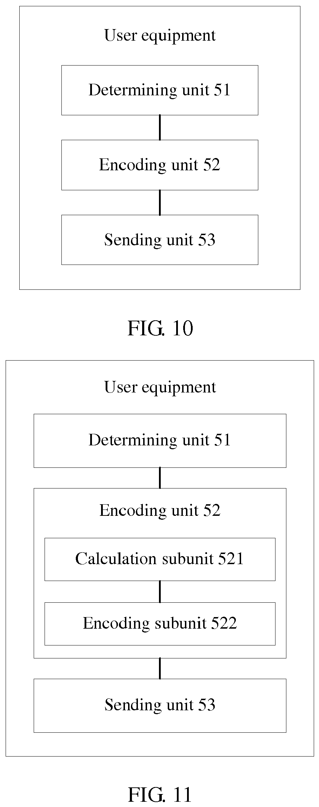

This embodiment of the present invention provides user equipment. As shown in FIG. 10, the user equipment may include a determining unit 51, an encoding unit 52, and a sending unit 53.

The determining unit 51 is configured to determine a first bit quantity. The first bit quantity is a quantity of bits that are on a first channel and that enhanced dedicated physical control channel E-DPCCH transmission information can occupy in one timeslot. The E-DPCCH transmission information includes a transport format combination indicator E-TFCI. The first channel is used to carry the E-DPCCH transmission information and dedicated physical control channel DPCCH transmission information.

The encoding unit 52 is configured to encode the E-DPCCH transmission information according to a second bit quantity, the first bit quantity that is determined by the determining unit 51, and frame structure information of the first channel, to obtain E-DPCCH encoded bits. The second bit quantity is a quantity of bits that the E-DPCCH transmission information occupies before the E-DPCCH transmission information is transmitted through an E-DPCCH and before the E-DPCCH transmission information is encoded. The frame structure information of the first channel includes a quantity of timeslots included in one frame of the first channel.

The sending unit 53 is configured to send, to a base station through the first channel, the E-DPCCH encoded bits obtained after the encoding by the encoding unit 52. A quantity of bits that are on the first channel and that the E-DPCCH encoded bits occupy in one timeslot is equal to the first bit quantity.

Further, as shown in FIG. 11, the encoding unit 52 may specifically include a calculation subunit 521 and an encoding subunit 522.

The calculation subunit 521 is configured to calculate a third bit quantity with reference to a preset quantity of frames and according to the frame structure information of the first channel and the first bit quantity that is determined by the determining unit 51. The preset quantity of frames is used to indicate a quantity of frames used to send the E-DPCCH encoded bits through the first channel. The third bit quantity is a quantity of bits that are on the first channel and that the E-DPCCH information can occupy in M frames, M is the preset quantity of frames, and M≥1.

The encoding subunit 522 is configured to encode the E-DPCCH transmission information according to the second bit quantity and the third bit quantity obtained after the calculation by the calculation subunit 521, to obtain the E-DPCCH encoded bits.

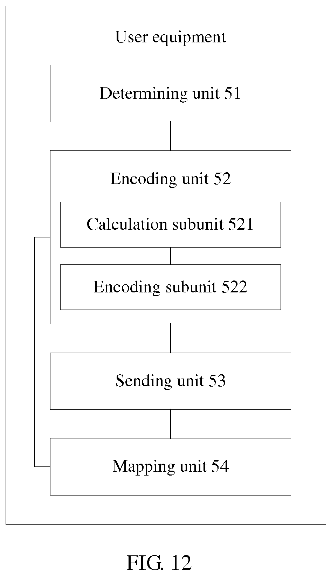

Further, as shown in FIG. 12, the user equipment provided in this embodiment of the present invention may further include a mapping unit 54.

The mapping unit 54 is configured to map the E-DPCCH encoded bits obtained after the encoding by the encoding unit 52 to each timeslot of the M frames of the first channel according to an encoding sequence, where M is the preset quantity of frames, and M≥1. The preset quantity of frames is used to indicate the quantity of frames used to send the E-DPCCH encoded bits through the first channel.

The sending unit 53 is further configured to separately send, in each timeslot of the M frames through the first channel, E-DPCCH encoded bits mapped by the mapping unit 54 in the timeslot.

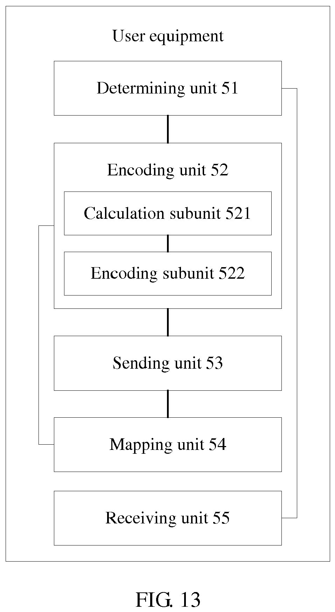

Further, as shown in FIG. 13, the user equipment provided in this embodiment of the present invention may further include a receiving unit 55.

The receiving unit 55 is configured to receive timeslot format information that is sent by the base station through a broadcast channel. The timeslot format information includes a timeslot format set. The timeslot format set includes at least one timeslot format that can be used when the user equipment sends the E-RACH to the base station through the first channel. The timeslot format is used to indicate the quantity of bits that are on the first channel and that the E-DPCCH transmission information can occupy in one timeslot.

The determining unit 51 is further configured to: determine a first timeslot format from the timeslot format set received by the receiving unit 55, where the first timeslot format is a timeslot format used when the user equipment sends the E-RACH to the base station through the first channel; and determine the first bit quantity according to the first timeslot format determined by the determining unit 51.

Further, in a case of this embodiment of the present invention, the timeslot format information further includes a preamble sequence set and a first correspondence. The preamble sequence set includes at least one preamble sequence and a sequence number of the preamble sequence. The first correspondence is used to indicate a correspondence between a sequence number and a timeslot format.

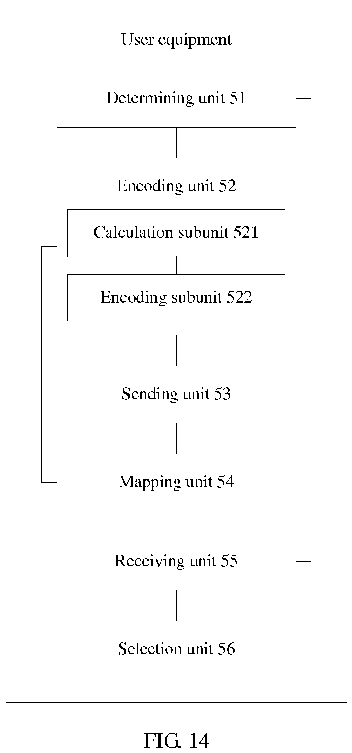

Further, as shown in FIG. 14, the user equipment provided in this embodiment of the present invention may further include a selection unit 56.

The selection unit 56 is configured to select the sequence number from the preamble sequence set.

The sending unit 53 is further configured to send, to the base station, a preamble sequence corresponding to the selected sequence number.

The receiving unit 55 is further configured to receive an acquisition indicator AI sent by the base station.

The determining unit 51 is further configured to determine the first timeslot format according to the first correspondence when the receiving unit 55 receives the AI from the base station. The first timeslot format is a timeslot format that is in the timeslot format set and corresponding to the sequence number selected by the selection unit 56.

Further, in another case of this embodiment of the present invention, the timeslot format information further includes a preamble sequence set, a scrambling code set, and a second correspondence. The preamble sequence set includes at least one preamble sequence and a sequence number of the preamble sequence. The scrambling code set includes at least one scrambling code. The second correspondence is used to indicate a correspondence between a scrambling code and a timeslot format.

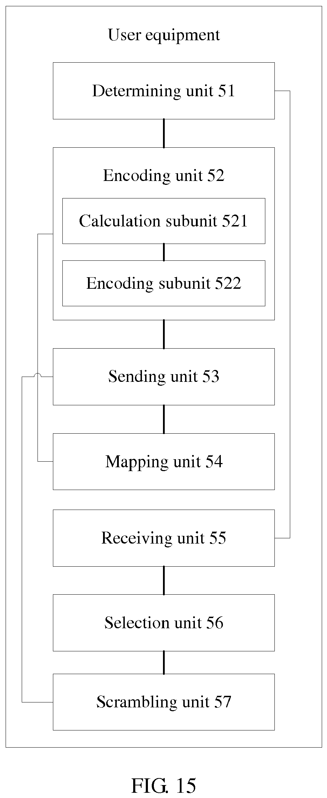

In this case, as shown in FIG. 15, the user equipment may include a selection unit 56 and a scrambling unit 57.

The selection unit 56 is configured to: select the sequence number from the preamble sequence set, and select a scrambling code from the scrambling code set.

The scrambling unit 57 is configured to scramble, by using the scrambling code selected by the selection unit 56, a preamble sequence corresponding to the selected sequence number.

The sending unit 53 is further configured to send, to the base station, the preamble sequence obtained after the scrambling by the scrambling unit 57.

The determining unit 51 is further configured to determine the first timeslot format according to the second correspondence when the AI is received from the base station. The first timeslot format is a timeslot format that is in the timeslot format set and corresponding to the selected scrambling code.

Optionally, the first timeslot format is further used to indicate a quantity of bits that are on the first channel and that the dedicated physical control channel DPCCH transmission information can occupy in one timeslot.

Further, the DPCCH transmission information includes a pilot and a transmit power control TPC instruction.

Optionally, the first channel is further used to carry E-DPDCH transmission information. The first timeslot format is further used to indicate a quantity of bits that are on the first channel and that the enhanced dedicated physical data channel E-DPDCH transmission information can occupy in one timeslot.

Optionally, the first channel is a DPCCH.

Optionally, the E-DPCCH transmission information further includes a retransmission sequence number RSN.

Further, the encoding unit 52 is further configured to encode the E-DPCCH transmission information by using an RM encoding mode.

For specific descriptions about the user equipment provided in this embodiment of the present invention, reference may be made to corresponding content in the method embodiments. Details are not described herein again in this embodiment.

According to the user equipment provided in this embodiment of the present invention, a determining unit determines a first bit quantity. An encoding unit encodes E-DPCCH transmission information according to a second bit quantity, the first bit quantity, and frame structure information of a DPCCH, to obtain E-DPCCH encoded bits. Then, the sending unit sends the E-DPCCH encoded bits to a base station through a first channel. In the prior art, each user equipment needs to send an E-DPDCH, an E-DPCCH, and the DPCCH to the base station, thereby causing a relatively large uplink transmission data volume and a relatively large channel overhead. In comparison with the prior art, in this solution, the user equipment does not need to send the E-DPCCH to the base station, but encodes the E-DPCCH transmission information, maps encoded E-DPCCH transmission information (the E-DPCCH encoded bits) to the first channel (DPCCH), and sends the E-DPCCH encoded bits to the base station through the first channel (DPCCH), so as to reduce the channel overhead. In addition, in the prior art, the E-DPCCH transmission information includes an E-TFCI, an RSN, and an HB. In comparison with the prior art, the E-DPCCH transmission information in this embodiment of the present invention may include only the E-TFCI, so as to further reduce the channel overhead.

**Embodiment 6**

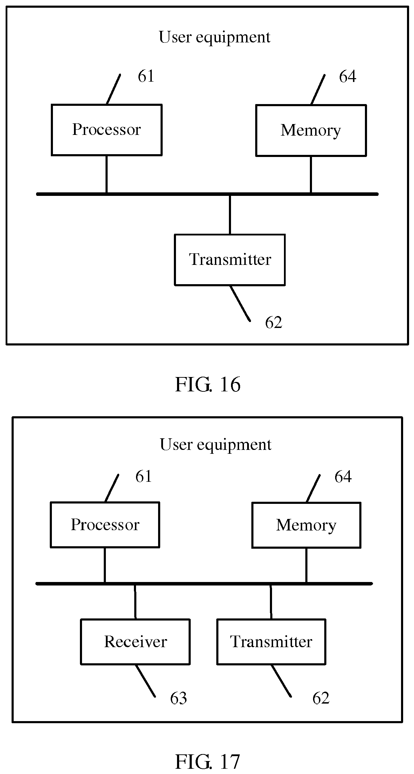

This embodiment of the present invention provides user equipment. As shown in FIG. 16, the user equipment may include a processor 61 and a transmitter 62.

The processor 61 determines a first bit quantity, where the first bit quantity is a quantity of bits that are on a first channel and that E-DPCCH transmission information can occupy in one timeslot, the E-DPCCH transmission information includes a transport format combination indicator E-TFCI, and the first channel is used to carry the E-DPCCH transmission information and DPCCH transmission information; and encodes the E-DPCCH transmission information according to a second bit quantity, the first bit quantity, and frame structure information of the first channel, to obtain E-DPCCH encoded bits, where the second bit quantity is a quantity of bits that the E-DPCCH transmission information occupies before the E-DPCCH transmission information is transmitted through an E-DPCCH and before the E-DPCCH transmission information is encoded, and the frame structure information of the first channel includes a quantity of timeslots included in one frame of the first channel.

The transmitter 62 is configured to send the E-DPCCH encoded bits to a base station through the first channel. A quantity of bits that are on the first channel and that the E-DPCCH encoded bits occupy in one timeslot is equal to the first bit quantity.

Further, the processor 61 is further configured to: calculate a third bit quantity according to the first bit quantity and the frame structure information of the first channel and with reference to a preset quantity of frames, where the preset quantity of frames is used to indicate a quantity of frames used to send the E-DPCCH encoded bits through the first channel, the third bit quantity is a quantity of bits that are on the first channel and that the E-DPCCH information can occupy in M frames, M is the preset quantity of frames, and $M \geq 1$; and encode the E-DPCCH transmission information according to the third bit quantity and the second bit quantity, to obtain the E-DPCCH encoded bits.

Further, the processor 61 is further configured to map the E-DPCCH encoded bits to each timeslot of the M frames of the first channel according to an encoding sequence, where M is the preset quantity of frames, and $M \geq 1$. The preset quantity of frames is used to indicate the quantity of frames used to send the E-DPCCH encoded bits through the first channel.

The transmitter 62 is further configured to separately send, in each timeslot of the M frames through the first channel, E-DPCCH encoded bits mapped in the timeslot.

Further, as shown in FIG. 17, the user equipment provided in this embodiment of the present invention may further include a receiver 63.

The receiver 63 is configured to receive timeslot format information that is sent by the base station through a broadcast channel. The timeslot format information includes a timeslot format set. The timeslot format set includes at least one timeslot format that can be used when the user equipment sends an E-RACH to the base station through the first channel. The timeslot format is used to indicate the quantity of bits that are on the first channel and that the E-DPCCH transmission information can occupy in one timeslot.

The processor 61 is further configured to: determine a first timeslot format from the timeslot format set received by the receiver 63, where the first timeslot format is a timeslot format used when the user equipment sends the E-RACH to the base station through the first channel; and determine the first bit quantity according to the first timeslot format.

Further, in a case of this embodiment of the present invention, the timeslot format information further includes a preamble sequence set and a first correspondence. The preamble sequence set includes at least one preamble sequence and a sequence number of the preamble sequence. The first correspondence is used to indicate a correspondence between a sequence number and a timeslot format.

The processor 61 is further configured to select a sequence number from the preamble sequence set.

The transmitter 62 is further configured to send, to the base station, a preamble sequence corresponding to the sequence number selected by the processor 61.

The receiver 63 is further configured to receive an acquisition indicator AI sent by the base station.

The processor 61 is further configured to determine the first timeslot format according to the first correspondence when the receiver 63 receives the AI from the base station. The first timeslot format is a timeslot format that is in the timeslot format set and corresponding to the selected sequence number.

Further, in another case of this embodiment of the present invention, the timeslot format information further includes a preamble sequence set, a scrambling code set, and a second correspondence. The preamble sequence set includes at least one preamble sequence and a sequence number of the preamble sequence. The scrambling code set includes at least one scrambling code. The second correspondence is used to indicate a correspondence between a scrambling code and a timeslot format.

The processor 61 is further configured to: select the sequence number from the preamble sequence set, and select a scrambling code from the scrambling code set; and scramble, by using the selected scrambling code, a preamble sequence corresponding to the selected sequence number.

The transmitter 62 is further configured to send a scrambled preamble sequence to the base station.

The receiver 63 is further configured to receive an acquisition indicator AI sent by the base station.

The processor 61 is further configured to determine the first timeslot format according to the second correspondence when the AI is received from the base station. The first timeslot format is a timeslot format that is in the timeslot format set and corresponding to the selected scrambling code.

Optionally, the first timeslot format is further used to indicate a quantity of bits that are on the first channel and that the dedicated physical control channel DPCCH transmission information can occupy in one timeslot.

Further, the DPCCH transmission information includes a pilot and a transmit power control TPC instruction.

Optionally, the first channel is further used to carry E-DPDCH transmission information. The first timeslot format is further used to indicate a quantity of bits that are on the first channel and that the enhanced dedicated physical data channel E-DPDCH transmission information can occupy in one timeslot.

Optionally, the first channel is a DPCCH.

Optionally, the E-DPCCH transmission information further includes a retransmission sequence number RSN.

Further, the processor 61 is further configured to encode the E-DPCCH transmission information by using an RM encoding mode.

In this embodiment of the present invention, by using a bus, the processor 61, the transmitter 62, and the receiver 63 are connected to each other and communicate with each other.

The bus may be an industry standard architecture (Industry Standard Architecture, ISA) bus, a Peripheral Component Interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of illustration, the bus is represented by using only a bold line in FIG. 16 and FIG. 17. However, it does not indicate that there is only one bus or only one type of bus.

The processor 61 may be a central processing unit (Central Processing Unit, CPU), or may be a combination of a GPU, a digital signal processor (Digital Signal Processor, DSP), and a control chip (for example, a baseband chip) in a communications unit. In this embodiment of the present invention, the CPU may be a single computation core, or may include multiple computation cores.

The transmitter 62 and the receiver 63 may be an apparatus that sends and receives a radio signal by using an antenna, or may be another apparatus that provides a signal sending interface and a signal receiving interface.

In this embodiment of the present invention, the user equipment may further include a memory 64. The memory 64 may be configured to store data such as the first bit quantity, the second bit quantity, the preset quantity of frames, and the third bit quantity in this embodiment of the present invention. The memory 64 is further configured to store a group of program code. The program code is program code to be executed by the processor 61. The memory 64 may be a computer storage medium of the user equipment. For example, the memory 64 may be a random access memory (Random Access Memory, RAM), a read-only memory (Read-only Memory, ROM), a flash memory (Flash Memory), or the like.

For specific descriptions about the user equipment provided in this embodiment of the present invention, reference may be made to corresponding content in the method embodiments. Details are not described herein again in this embodiment.

According to the user equipment provided in this embodiment of the present invention, a processor determines a first bit quantity, and encodes E-DPCCH transmission information according to a second bit quantity, the first bit quantity, and frame structure information of a DPCCH, to obtain E-DPCCH encoded bits. Then, a transmitter sends the E-DPCCH encoded bits to a base station through a first channel. In the prior art, each user equipment needs to send an E-DPDCH, an E-DPCCH, and the DPCCH to the base station, thereby causing a relatively large uplink transmission data volume and a relatively large channel overhead. In comparison with the prior art, in this solution, the user equipment does not need to send the E-DPCCH to the base station, but encodes the E-DPCCH transmission information, maps encoded E-DPCCH transmission information (the E-DPCCH encoded bits) to the first channel, and sends the E-DPCCH encoded bits to the base station through the first channel, so as to reduce the channel overhead. In addition, in the prior art, the E-DPCCH transmission information includes an E-TFCI, an RSN, and an HB. In comparison with the prior art, the E-DPCCH transmission information in this embodiment of the present invention may include only the E-TFCI, so as to further reduce the channel overhead.

**Embodiment 7**

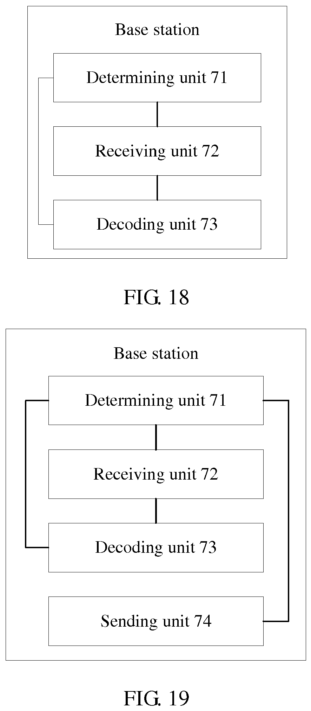

This embodiment of the present invention provides a base station. As shown in FIG. 18, the base station may include a determining unit 71, a receiving unit 72, and a decoding unit 73.

The determining unit 71 is configured to determine a first bit quantity. The first bit quantity is a quantity of bits that are on a first channel and that enhanced dedicated physical control channel E-DPCCH transmission information can occupy in one timeslot. The E-DPCCH transmission information includes a transport format combination indicator E-TFCI. The first channel is used to carry the E-DPCCH transmission information and DPCCH transmission information.

The receiving unit 72 is configured to receive E-DPCCH encoded bits sent by the user equipment through the first channel.

The decoding unit 73 is configured to decode, according to the first bit quantity that is determined by the determining unit 71, frame structure information of the first channel, and a second bit quantity, the E-DPCCH encoded bits received by the receiving unit 72, to obtain the E-DPCCH transmission information. The second bit quantity is a quantity of bits that the E-DPCCH transmission information occupies before the E-DPCCH transmission information is transmitted through an E-DPCCH and before the E-DPCCH transmission information is encoded.

Further, as shown in FIG. 19, the base station provided in this embodiment of the present invention may further include a sending unit 74.

The sending unit 74 is configured to send timeslot format information to the user equipment through a broadcast channel. The timeslot format information includes a timeslot format set. The timeslot format set includes at least one timeslot format that can be used when the user equipment sends an E-RACH to the base station through the first channel. The timeslot format is used to indicate the quantity of bits that are on the first channel and that the E-DPCCH transmission information can occupy in one timeslot. The E-DPCCH transmission information includes a transport format combination indicator E-TFCI.

The determining unit 71 is further configured to: determine a first timeslot format from the timeslot format set sent by the sending unit 74, where the first timeslot format is a timeslot format used when the user equipment sends the E-RACH to the base station through the first channel; and determine the first bit quantity according to the first timeslot format determined by the determining unit 71.

Further, in a case of this embodiment of the present invention, the timeslot format information further includes a preamble sequence set and a first correspondence. The preamble sequence set includes at least one preamble sequence and a sequence number of the preamble sequence. The first correspondence is used to indicate a correspondence between a sequence number and a timeslot format.

The receiving unit 72 is further configured to receive a preamble sequence sent by the user equipment.

The determining unit 71 is further configured to: when the preamble sequence received by the receiving unit 72 meets a first preset condition, determine, as the first timeslot format according to the first correspondence, a timeslot format that is in the timeslot format set and corresponding to a sequence number of the received preamble sequence.

The first preset condition is specifically that the received preamble sequence is not allocated to another user equipment.

Further, in another case of this embodiment of the present invention, the timeslot format information further includes a preamble sequence set, a scrambling code set, and a second correspondence. The preamble sequence set includes at least one preamble sequence and a sequence number of the preamble sequence. The scrambling code set includes at least one scrambling code. The second correspondence is used to indicate a correspondence between a scrambling code and a timeslot format.

The receiving unit 72 is further configured to receive a scrambled preamble sequence sent by the user equipment.

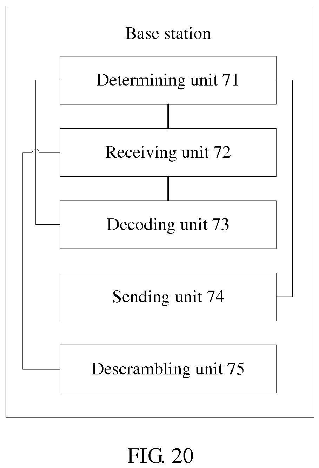

Further, as shown in FIG. 20, the base station provided in this embodiment of the present invention may further include a descrambling unit 75.

The descrambling unit 75 is configured to: attempt to descramble the scrambled preamble sequence received by the receiving unit 72, to obtain a descrambled preamble sequence; and determine a scrambling code for scrambling the preamble sequence.

The determining unit 71 is further configured to: when it is determined, according to the descrambled preamble sequence obtained after the descrambling by the descrambling unit 75 and the scrambling code for scrambling the preamble sequence, that the scrambled preamble sequence meets a second preset condition, determine, as the first timeslot format according to the second correspondence, a timeslot format that is in the timeslot format set and corresponding to the scrambling code for scrambling the preamble sequence.

The second preset condition is specifically that the scrambled preamble sequence is not allocated to another user equipment.

Further, the sending unit 74 is further configured to send an acquisition indicator AI to the user equipment after the determining unit 71 determines the first timeslot format from the timeslot format set. The AI is used to instruct the user equipment to send the E-RACH to the base station through the first channel by using the first timeslot format.

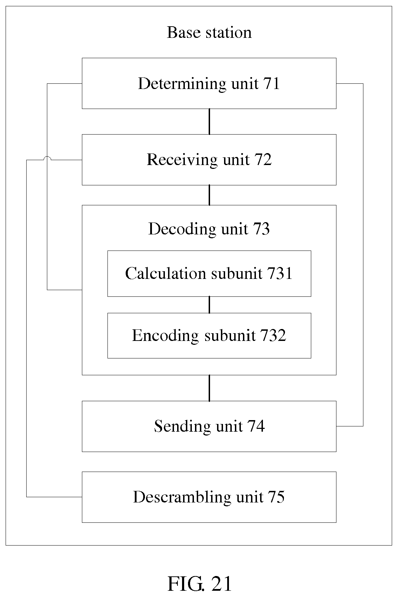

Further, as shown in FIG. 21, the decoding unit 73 may include a calculation subunit 731 and a decoding subunit 732.

The calculation subunit 731 is configured to calculate a third bit quantity according to the first bit quantity and the frame structure information of the first channel and with reference to a preset quantity of frames. The preset quantity of frames is used to indicate a quantity of frames used to send the E-DPCCH encoded bits through the first channel. The third bit quantity is a quantity of bits that are on the first channel and that the E-DPCCH information can occupy in M frames, M is the preset quantity of frames, and $M \geq 1$.

The decoding subunit 732 is configured to decode the E-DPCCH encoded bits according to the second bit quantity and the third bit quantity obtained after the calculation by the calculation subunit 731, to obtain the E-DPCCH transmission information.

Further, the decoding unit 73 is further configured to decode the E-DPCCH encoded bits by using an RM decoding mode.

For specific descriptions about the base station provided in this embodiment of the present invention, reference may be made to corresponding content in the method embodiments. Details are not described herein again in this embodiment.

According to the base station provided in this embodiment of the present invention, a determining unit determines a first bit quantity. The first bit quantity is a quantity of bits that are on a first channel and that E-DPCCH transmission information can occupy in one timeslot. A receiving unit receives E-DPCCH encoded bits sent by user equipment through the first channel. The E-DPCCH encoded bits are decoded according to the first bit quantity determined by the determining unit, frame structure information of the first channel, and a second bit quantity, to obtain the E-DPCCH transmission information. In the prior art, each user equipment needs to send an E-DPDCH, an E-DPCCH, and the DPCCH to the base station, thereby causing a relatively large uplink transmission data volume and a relatively large channel overhead. In comparison with the prior art, in this solution, the user equipment does not need to send the E-DPCCH to the base station, but encodes the E-DPCCH transmission information, maps encoded E-DPCCH transmission information (the E-DPCCH encoded bits) to the first channel, and sends the E-DPCCH encoded bits to the base station through the first channel, so as to reduce the channel overhead.

Embodiment 8

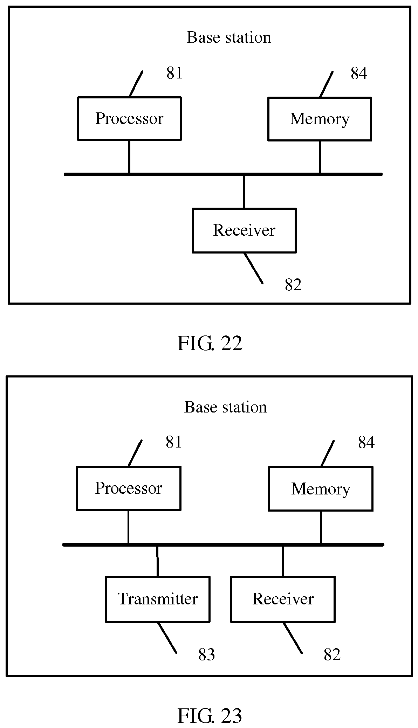

This embodiment of the present invention provides a base station. As shown in FIG. 22, the base station may include a processor 81 and a receiver 82.

The processor 81 is configured to determine a first bit quantity. The first bit quantity is a quantity of bits that are on a first channel and that enhanced dedicated physical control channel E-DPCCH transmission information can occupy in one timeslot. The E-DPCCH transmission information includes a transport format combination indicator E-TFCI. The first channel is used to carry the E-DPCCH transmission information and DPCCH transmission information.

The receiver 82 is configured to receive E-DPCCH encoded bits sent by the user equipment through the first channel.

The processor 81 is further configured to decode, according to the first bit quantity, frame structure information of the first channel, and a second bit quantity, the E-DPCCH encoded bits received by the receiver 82, to obtain the E-DPCCH transmission information. The second bit quantity is a quantity of bits that the E-DPCCH transmission information occupies before the E-DPCCH transmission information is transmitted through an E-DPCCH and before the E-DPCCH transmission information is encoded.

Further, as shown in FIG. 23, the base station in this embodiment of the present invention may further include a transmitter 83.

The transmitter 83 is configured to send timeslot format information to the user equipment through a broadcast channel. The timeslot format information includes a timeslot format set. The timeslot format set includes at least one timeslot format that can be used when the user equipment sends an E-RACH to the base station through the first channel. The timeslot format is used to indicate the quantity of bits that are on the first channel and that the E-DPCCH transmission information can occupy in one timeslot. The E-DPCCH transmission information includes a transport format combination indicator E-TFCI.

The processor 81 is further configured to: determine a first timeslot format from the timeslot format set sent by the transmitter 83, where the first timeslot format is a timeslot format used when the user equipment sends the E-RACH to the base station through the first channel; and determine the first bit quantity according to the first timeslot format.

Further, in a case of this embodiment of the present invention, the timeslot format information further includes a preamble sequence set and a first correspondence. The preamble sequence set includes at least one preamble sequence and a sequence number of the preamble sequence. The first correspondence is used to indicate a correspondence between a sequence number and a timeslot format.

Further, the receiver 82 is further configured to receive a preamble sequence sent by the user equipment.

The processor 81 is further configured to: when the preamble sequence received by the receiver 82 meets a first preset condition, determine, as the first timeslot format according to the first correspondence, a timeslot format that is in the timeslot format set and corresponding to a sequence number of the received preamble sequence.

The first preset condition is specifically that the received preamble sequence is not allocated to another user equipment.

Further, in another case of this embodiment of the present invention, the timeslot format information further includes a preamble sequence set, a scrambling code set, and a second correspondence. The preamble sequence set includes at least one preamble sequence and a sequence number of the preamble sequence. The scrambling code set includes at least one scrambling code. The second correspondence is used to indicate a correspondence between a scrambling code and a timeslot format.

Further, the receiver 82 is further configured to receive a scrambled preamble sequence sent by the user equipment.

The processor 81 is further configured to: attempt to descramble the scrambled preamble sequence received by the receiver 82, to obtain a descrambled preamble sequence; determine a scrambling code for scrambling the preamble sequence; and when it is determined, according to the descrambled preamble sequence and the scrambling code for scrambling the preamble sequence, that the scrambled preamble sequence meets a second preset condition, determine, as the first timeslot format according to the second correspondence, a timeslot format that is in the timeslot format set and corresponding to the scrambling code for scrambling the preamble sequence.

The second preset condition is specifically that the scrambled preamble sequence is not allocated to another user equipment.

Further, the transmitter 83 is further configured to send an acquisition indicator AI to the user equipment after the first timeslot format is determined from the timeslot format set. The AI is used to instruct the user equipment to send the E-RACH to the base station through the first channel by using the first timeslot format.

Further, the processor 81 is further configured to: calculate a third bit quantity according to the first bit quantity and the frame structure information of the first channel and with reference to a preset quantity of frames, where the preset quantity of frames is used to indicate a quantity of frames used to send the E-DPCCH encoded bits through the first channel, the third bit quantity is a quantity of bits that are on the first channel and that the E-DPCCH information can occupy in M frames, M is the preset quantity of frames, and M≥1; and decode, according to the second bit quantity and the third bit quantity, the E-DPCCH encoded bits received by the receiver 82, to obtain the E-DPCCH transmission information.

Further, the processor 81 is further configured to decode the E-DPCCH encoded bits by using an RM decoding mode.

In this embodiment of the present invention, by using a bus, the processor 81, the receiver 82, and the transmitter 83 are connected to each other and communicate with each other.

The bus may be an industry standard architecture (Industry Standard Architecture, ISA) bus, a Peripheral Component Interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of illustration, the bus is represented by using only a bold line in FIG. 22 and FIG. 23. However, it does not indicate that there is only one bus or only one type of bus.

The processor 81 may be a central processing unit (Central Processing Unit, CPU), or may be a combination of a GPU, a digital signal processor (Digital Signal Processor, DSP), and a control chip (for example, a baseband chip) in a communications unit. In this embodiment of the present invention, the CPU may be a single computation core, or may include multiple computation cores.

The receiver 82 and the transmitter 83 may be an apparatus that receives and sends a radio signal by using an antenna, or may be another apparatus that provides a signal receiving interface and a signal sending interface.

In this embodiment of the present invention, the user equipment may further include a memory 84. The memory 84 may be configured to store data such as the first bit quantity, the second bit quantity, the preset quantity of frames, and the third bit quantity in this embodiment of the present invention. The memory 84 is further configured to store a group of program code. The program code is program code to be executed by the processor 81. The memory 84 may be a computer storage medium such as a random access memory (Ramdom Access Memory, RAM), a read-only memory (Read-only Memory, ROM), or a flash memory (Flash Memory).

For specific descriptions about the base station provided in this embodiment of the present invention, reference may be made to corresponding content in the method embodiments. Details are not described herein again in this embodiment.

According to the base station provided in this embodiment of the present invention, a processor determines a first bit quantity. The first bit quantity is a quantity of bits that are on a first channel and that E-DPCCH transmission information can occupy in one timeslot. A receiver receives E-DPCCH encoded bits sent by user equipment through the first channel. The E-DPCCH encoded bits are decoded according to the first bit quantity determined by the processor, frame structure information of the first channel, and a second bit quantity, to obtain the E-DPCCH transmission information. In the prior art, each user equipment needs to send an E-DPDCH, an E-DPCCH, and a DPCCH to the base station, thereby causing a relatively large uplink transmission data volume and a relatively large channel overhead. In comparison with the prior art, in this solution, the user equipment does not need to send the E-DPCCH to the base station, but encodes the E-DPCCH transmission information, maps encoded E-DPCCH transmission information (the E-DPCCH encoded bits) to the first channel, and sends the E-DPCCH encoded bits to the base station through the first channel, so as to reduce the channel overhead.

**Embodiment 9**

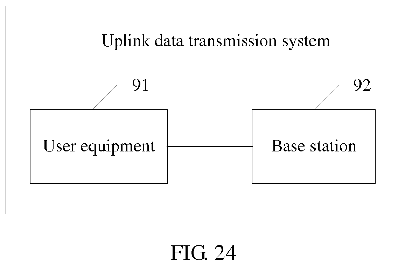

This embodiment of the present invention provides an uplink data transmission system. As shown in FIG. 24, the uplink data transmission system may include user equipment 91 and a base station 92.

The user equipment 91 is configured to: determine a first bit quantity, where the first bit quantity is a quantity of bits that are on a first channel and that enhanced dedicated physical control channel E-DPCCH transmission information can occupy in one timeslot, the E-DPCCH transmission information includes a transport format combination indicator E-TFCI, and the first channel is used to carry the E-DPCCH transmission information and dedicated physical control channel DPCCH transmission information; encode the E-DPCCH transmission information according to a second bit quantity, the first bit quantity, and frame structure information of the first channel, to obtain E-DPCCH encoded bits, where the second bit quantity is a quantity of bits that the E-DPCCH transmission information occupies before the E-DPCCH transmission information is transmitted through an E-DPCCH and before the E-DPCCH transmission information is encoded, and the frame structure information of the first channel includes a quantity of timeslots included in one frame of the first channel; and send the E-DPCCH encoded bits to the base station through the first channel, where a quantity of bits that are on the first channel and that the E-DPCCH encoded bits occupy in one timeslot is equal to the first bit quantity.

The first channel may be a DPCCH, or may be a new channel. Specific content of the first channel is not limited in this embodiment of the present invention. The user equipment 91 may be any user equipment described in the foregoing embodiments. For specific descriptions about the user equipment 91, reference may be made to corresponding content of the user equipment in the foregoing embodiments. For specific descriptions about some function modules of the user equipment, reference may be made to corresponding content in the method embodiments. Details are not described herein again in this embodiment.

The base station 92 is configured to: determine the first bit quantity, where the first bit quantity is the quantity of bits that are on the first channel and that the enhanced dedicated physical control channel E-DPCCH transmission information can occupy in one timeslot, the E-DPCCH transmission information includes the transport format combination indicator E-TFCI, and the first channel is used to carry the E-DPCCH transmission information and the dedicated physical control channel DPCCH transmission information; receive the E-DPCCH encoded bits sent by the user equipment through the first channel; and decode the E-DPCCH encoded bits according to the first bit quantity, the frame structure information of the first channel, and the second bit quantity, to obtain the E-DPCCH transmission information, where the second bit quantity is the quantity of bits that the E-DPCCH transmission information occupies before the E-DPCCH transmission information is transmitted through the E-DPCCH and before the E-DPCCH transmission information is encoded.

The base station 92 may be any base station described in the foregoing embodiments. For specific descriptions about the base station 92, reference may be made to corresponding content of the base station in the foregoing embodiments. For specific descriptions about some function modules of the base station, reference may be made to corresponding content in the method embodiments. Details are not described herein again in this embodiment.

According to the uplink data transmission system provided in this embodiment of the present invention, user equipment determines a first bit quantity; encodes E-DPCCH transmission information according to a second bit quantity, the first bit quantity, and frame structure information of a first channel, to obtain E-DPCCH encoded bits; and sends the E-DPCCH encoded bits to a base station through the first channel. Correspondingly, the base station may determine the first bit quantity; receives the E-DPCCH encoded bits sent by the user equipment through the first channel; and decodes the E-DPCCH encoded bits according to the first bit quantity, the frame structure information of the first channel, and the second bit quantity, to obtain the E-DPCCH transmission information.

In the prior art, each user equipment needs to send an E-DPDCH, an E-DPCCH, and a DPCCH to the base station, thereby causing a relatively large uplink transmission data volume and a relatively large channel overhead. In comparison with the prior art, in this solution, the user equipment does not need to send the E-DPCCH to the base station, but encodes the E-DPCCH transmission information, maps encoded E-DPCCH transmission information (the E-DPCCH encoded bits) to the first channel, and sends the E-DPCCH encoded bits to the base station through the first channel, so as to reduce the channel overhead. In addition, in the prior art, the E-DPCCH transmission information includes an E-TFCI, an RSN, and an HB. In comparison with the prior art, the E-DPCCH transmission information in this embodiment of the present invention may include only the E-TFCI, so as to further reduce the channel overhead.

Further, the foregoing embodiment may be applied to a machine-to-machine (Machine-To-Machine, M2M) communications network. M2M is a technology in which information can be effectively transmitted between machines and manual intervention is minimized. The M2M communications network mainly features mass machine terminals, most small-sized packet services, discontinuous service transmission, a low delay requirement in a service transmission process, and the like. Compared with a conventional cellular communications network, in the M2M communications network, there is a large quantity of user equipments, and the quantity of user equipments may increase by two orders of magnitude. In the M2M communications network, if each user equipment needs to send an E-DPDCH, an E-DPCCH, and a DPCCH to the base station, many E-DPDCHs, E-DPCCHs, DPCCHs are sent, thereby causing large channel overheads occupied by control channels of the E-DPCCHs and the DPCCHs. This affects a network capacity of the M2M communications network, and causes low network efficiency. However, in this solution, the user equipment does not need to send the E-DPCCH to the base station, but encodes the E-DPCCH transmission information, maps encoded E-DPCCH transmission information (the E-DPCCH encoded bits) to the first channel, and sends the E-DPCCH encoded bits to the base station through the first channel, so as to reduce channel overheads. The data transmission method and the apparatus in this solution are applied to the M2M communications network. Therefore, the channel overhead occupied by the user equipment is greatly reduced, and the network capacity of the M2M communications network can be effectively ensured.

Certainly, this embodiment of the present invention may be applied to another scenario in which user equipment needs to send an E-DPDCH, an E-DPCCH, and a DPCCH to reduce channel overheads. The M2M communications network herein is merely an example of an application scenario of this embodiment of the present invention.

The foregoing descriptions about implementation manners allow a person skilled in the art to understand that, for convenient and brief descriptions, division of the foregoing function modules is used as an example for description. In actual application, the foregoing functions can be allocated to different function modules for implementation according to a requirement, that is, an inner structure of an apparatus is divided into different function modules to implement all or some of the functions described above. For a detailed working process of the foregoing system, apparatus, and units, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the module or unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate. Parts displayed as units may or may not be physical units, that is, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software function unit.

When being implemented in a form of a software functional unit, and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in the embodiments of the present invention. The foregoing storage medium includes various mediums that can store program code, such as a USB flash drive, a removable hard disk, a read-only memory (ROM, Read-Only Memory), a random access memory (RAM, Random Access Memory), a magnetic disk, and an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. An uplink data transmission method, comprising:

   determining a first bit quantity, wherein the first bit quantity is a quantity of bits that are on a first channel and that enhanced dedicated physical control channel E-DPCCH transmission information can occupy in one timeslot, the E-DPCCH transmission information comprises a transport format combination indicator E-TFCI, and the first channel is used to carry the E-DPCCH transmission information and dedicated physical control channel DPCCH transmission information;

   encoding the E-DPCCH transmission information according to a second bit quantity, the first bit quantity, and frame structure information of the first channel, to obtain E-DPCCH encoded bits, wherein the second bit quantity is a quantity of bits that the E-DPCCH transmission information occupies before the E-DPCCH transmission information is transmitted through an E-DPCCH and before the E-DPCCH transmission information is encoded, and the frame structure information of the first channel comprises a quantity of timeslots comprised in one frame of the first channel; and

   sending the E-DPCCH encoded bits to a base station through the first channel, wherein a quantity of bits that are on the first channel and that the E-DPCCH encoded bits occupy in one timeslot is equal to the first bit quantity.

2. The method according to claim 1, wherein the encoding the E-DPCCH transmission information according to a second bit quantity, the first bit quantity, and frame structure information of the first channel, to obtain E-DPCCH encoded bits comprises:

   calculating a third bit quantity according to the first bit quantity and the frame structure information of the first channel and with reference to a preset quantity of frames, wherein the preset quantity of frames is used to indicate a quantity of frames used to send the E-DPCCH encoded bits through the first channel, the third bit quantity is a quantity of bits that are on the first channel and that the E-DPCCH transmission information can occupy in M frames, M is the preset quantity of frames, and M≥1; and

   encoding the E-DPCCH transmission information according to the third bit quantity and the second bit quantity, to obtain the E-DPCCH encoded bits.

3. The method according to claim 1 to 2, wherein the sending the E-DPCCH encoded bits to a base station through the first channel comprises:

   mapping the E-DPCCH encoded bits to each timeslot of the M frames of the first channel according to an encoding sequence, wherein M is the preset quantity of frames, M≥1, and the preset quantity of frames is used to indicate the quantity of frames used to send the E-DPCCH encoded bits through the first channel; and

   separately sending, in each timeslot of the M frames through the first channel, E-DPCCH encoded bits mapped in the timeslot.

4. The method according to claim 1, wherein the determining a first bit quantity comprises:

   receiving timeslot format information that is sent by the base station through a broadcast channel, wherein the timeslot format information comprises a timeslot format set, the timeslot format set comprises at least one timeslot format that can be used when user equipment sends E-RACH to the base station through the first channel, and the timeslot format is used to indicate the quantity of bits that are on the first channel and that the E-DPCCH transmission information can occupy in one timeslot;

   determining a first timeslot format from the timeslot format set, wherein the first timeslot format is a timeslot format used when the user equipment sends the E-RACH to the base station through the first channel; and

   determining the first bit quantity according to the first timeslot format.

5. The method according to claim 4, wherein the timeslot format information further comprises a preamble sequence set and a first correspondence, the preamble sequence set comprises at least one preamble sequence and a sequence number of the preamble sequence, and the first correspondence is used to indicate a correspondence between the sequence number and the timeslot format; and
the determining a first timeslot format from the timeslot format set comprises:

selecting the sequence number from the preamble sequence set, and sending, to the base station, a preamble sequence corresponding to the selected sequence number; and
determining the first timeslot format according to the first correspondence when an acquisition indicator AI is received from the base station, wherein the first timeslot format is a timeslot format that is in the timeslot format set and corresponding to the selected sequence number.

6. The method according to claim 4, wherein the timeslot format information further comprises a preamble sequence set, a scrambling code set, and a second correspondence, the preamble sequence set comprises at least one preamble sequence and a sequence number of the preamble sequence, the scrambling code set comprises at least one scrambling code, and the second correspondence is used to indicate a correspondence between the scrambling code and the timeslot format; and
the determining a first timeslot format from the timeslot format set comprises:

selecting the sequence number from the preamble sequence set, and selecting a scrambling code from the scrambling code set;
scrambling, by using the selected scrambling code, a preamble sequence corresponding to the selected sequence number;
sending a scrambled preamble sequence to the base station; and
determining the first timeslot format according to the second correspondence when an AI is received from the base station, wherein the first timeslot format is a timeslot format that is in the timeslot format set and corresponding to the selected scrambling code.

7. The method according to any one of claims 4 to 6, wherein the first timeslot format is further used to indicate a quantity of bits that are on the first channel and that the DPCCH transmission information can occupy in one timeslot; and
the DPCCH transmission information comprises a pilot and a transmit power control TPC instruction.

8. The method according to claim 7, wherein the first channel is further used to carry enhanced dedicated physical data channel E-DPDCH transmission information, and the first timeslot format is further used to indicate a quantity of bits that are on the first channel and that the E-DPDCH transmission information can occupy in one timeslot.

9. The method according to claim 7, wherein the first channel is a DPCCH.

10. The method according to claim 1, wherein the E-DPCCH transmission information further comprises a retransmission sequence number RSN.

11. The method according to claim 1 or 2, wherein an encoding mode used to encode the E-DPCCH transmission information comprises a Reed-Muller RM encoding mode.

12. An uplink data transmission method, comprising:

determining a first bit quantity, wherein the first bit quantity is a quantity of bits that are on a first channel and that enhanced dedicated physical control channel E-DPCCH transmission information can occupy in one timeslot, the E-DPCCH transmission information comprises a transport format combination indicator E-TFCI, and the first channel is used to carry the E-DPCCH transmission information and dedicated physical control channel DPCCH transmission information;
receiving E-DPCCH encoded bits sent by user equipment through the first channel; and
decoding the E-DPCCH encoded bits according to the first bit quantity, frame structure information of the first channel, and a second bit quantity, to obtain the E-DPCCH transmission information, wherein the second bit quantity is a quantity of bits that the E-DPCCH transmission information occupies before the E-DPCCH transmission information is transmitted through an E-DPCCH and before the E-DPCCH transmission information is encoded.

13. The method according to claim 12, wherein the determining a first bit quantity comprises:

sending timeslot format information to the user equipment through a broadcast channel, wherein the timeslot format information comprises a timeslot format set, the timeslot format set comprises at least one timeslot format that can be used when the user equipment sends the E-RACH to a base station through the first channel, the timeslot format is used to indicate the quantity of bits that are on the first channel and that the E-DPCCH transmission information can occupy in one timeslot, and the E-DPCCH transmission information comprises a transport format combination indicator E-TFCI;

determining a first timeslot format from the timeslot format set, wherein the first timeslot format is a timeslot format used when the user equipment sends the E-RACH to the base station through the first channel; and

determining the first bit quantity according to the first timeslot format.

14. The method according to claim 13, wherein the timeslot format information further comprises a preamble sequence set and a first correspondence, the preamble sequence set comprises at least one preamble sequence and a sequence number of the preamble sequence, and the first correspondence is used to indicate a correspondence between the sequence number and the timeslot format; and

the determining a first timeslot format from the timeslot format set comprises:

receiving a preamble sequence sent by the user equipment; and

when the received preamble sequence meets a first preset condition, determining, as the first timeslot format according to the first correspondence, a timeslot format that is in the timeslot format set and corresponding to a sequence number of the received preamble sequence, wherein

the first preset condition is specifically that the received preamble sequence is not allocated to another user equipment.

15. The method according to claim 13, wherein the timeslot format information further comprises a preamble sequence set, a scrambling code set, and a second correspondence, the preamble sequence set comprises at least one preamble sequence and a sequence number of the preamble sequence, the scrambling code set comprises at least one scrambling code, and the second correspondence is used to indicate a correspondence between the scrambling code and the timeslot format; and

the determining a first timeslot format from the timeslot format set comprises:

receiving a scrambled preamble sequence sent by the user equipment; and

attempting to descramble the scrambled preamble sequence to obtain a descrambled preamble sequence, and determining a scrambling code for scrambling the preamble sequence; and

when it is determined, according to the descrambled preamble sequence and the scrambling code for scrambling the preamble sequence, that the scrambled preamble sequence meets a second preset condition, determining, as the first timeslot format according to the second correspondence, a timeslot format that is in the timeslot format set and corresponding to the scrambling code for scrambling the preamble sequence, wherein

the second preset condition is specifically that the scrambled preamble sequence is not allocated to another user equipment.

16. The method according to any one of claims 13 to 15, wherein after the determining a first timeslot format from the timeslot format set, the method further comprises:

sending an acquisition indicator AI to the user equipment, wherein the AI is used to instruct the user equipment to send the E-RACH to the base station through the first channel by using the first timeslot format.

17. The method according to claim 12, wherein the decoding the E-DPCCH encoded bits according to the first bit quantity, frame structure information of the first channel, and a second bit quantity, to obtain the E-DPCCH transmission information comprises:

calculating a third bit quantity according to the first bit quantity and the frame structure information of the first channel and with reference to a preset quantity of frames, wherein the preset quantity of frames is used to indicate a quantity of frames used to send the E-DPCCH encoded bits through the first channel, the third bit quantity is a quantity of bits that are on the first channel and that the E-DPCCH transmission information can occupy in M frames, M is the preset quantity of frames, and $M \geq 1$; and

decoding the E-DPCCH encoded bits according to the third bit quantity and the second bit quantity, to obtain the E-DPCCH transmission information.

**18.** The method according to claim 12 or 17, wherein a decoding mode used to decode the E-DPCCH transmission information comprises a Reed-Muller RM decoding mode.

**19.** User equipment, comprising:

a determining unit, configured to determine a first bit quantity, wherein the first bit quantity is a quantity of bits that are on a first channel and that enhanced dedicated physical control channel E-DPCCH transmission information can occupy in one timeslot, the E-DPCCH transmission information comprises a transport format combination indicator E-TFCI, and the first channel is used to carry the E-DPCCH transmission information and dedicated physical control channel DPCCH transmission information;

an encoding unit, configured to encode the E-DPCCH transmission information according to a second bit quantity, the first bit quantity that is determined by the determining unit, and frame structure information of the first channel, to obtain E-DPCCH encoded bits, wherein the second bit quantity is a quantity of bits that the E-DPCCH transmission information occupies before the E-DPCCH transmission information is transmitted through an E-DPCCH and before the E-DPCCH transmission information is encoded, and the frame structure information of the first channel comprises a quantity of timeslots comprised in one frame of the first channel; and

a sending unit, configured to send, to a base station through the first channel, the E-DPCCH encoded bits obtained after the encoding by the encoding unit, wherein a quantity of bits that are on the first channel and that the E-DPCCH encoded bits occupy in one timeslot is equal to the first bit quantity.

**20.** The user equipment according to claim 19, wherein the encoding unit comprises:

a calculation subunit, configured to calculate a third bit quantity with reference to a preset quantity of frames and according to the frame structure information of the first channel and the first bit quantity that is determined by the determining unit, wherein the preset quantity of frames is used to indicate a quantity of frames used to send the E-DPCCH encoded bits through the first channel, the third bit quantity is a quantity of bits that are on the first channel and that the E-DPCCH transmission information can occupy in M frames, M is the preset quantity of frames, and M≥1; and

an encoding subunit, configured to encode the E-DPCCH transmission information according to the second bit quantity and the third bit quantity obtained after the calculation by the calculation subunit, to obtain the E-DPCCH encoded bits.

**21.** The user equipment according to claim 19 or 20, further comprising:

a mapping unit, configured to map the E-DPCCH encoded bits obtained after the encoding by the encoding unit to each timeslot of the M frames of the first channel according to an encoding sequence, wherein M is the preset quantity of frames, M≥1, and the preset quantity of frames is used to indicate the quantity of frames used to send the E-DPCCH encoded bits through the first channel, wherein

the sending unit is further configured to separately send, in each timeslot of the M frames through the first channel, E-DPCCH encoded bits mapped by the mapping unit in the timeslot.

**22.** The user equipment according to claim 19, further comprising:

a receiving unit, configured to receive timeslot format information that is sent by the base station through a broadcast channel, wherein the timeslot format information comprises a timeslot format set, the timeslot format set comprises at least one timeslot format that can be used when user equipment sends E-RACH to the base station through the first channel, and the timeslot format is used to indicate the quantity of bits that are on the first channel and that the E-DPCCH transmission information can occupy in one timeslot, wherein

the determining unit is further configured to: determine a first timeslot format from the timeslot format set received by the receiving unit, wherein the first timeslot format is a timeslot format used when the user equipment sends the E-RACH to the base station through the first channel; and determine the first bit quantity according to the first timeslot format.

**23.** The user equipment according to claim 22, wherein the timeslot format information further comprises a preamble sequence set and a first correspondence, the preamble sequence set comprises at least one preamble sequence and a sequence number of the preamble sequence, and the first correspondence is used to indicate a correspondence between the sequence number and the timeslot format; and

the user equipment further comprises:

a selection unit, configured to select the sequence number from the preamble sequence set, wherein the sending unit is further configured to send, to the base station, a preamble sequence corresponding to the sequence number selected by the selection unit;

the receiving unit is further configured to receive an acquisition indicator AI sent by the base station; and

the determining unit is further configured to determine the first timeslot format according to the first correspondence when the receiving unit receives the AI from the base station, wherein the first timeslot format is a timeslot format that is in the timeslot format set and corresponding to the sequence number selected by the first selection module.

24. The user equipment according to claim 22, wherein the timeslot format information further comprises a preamble sequence set, a scrambling code set, and a second correspondence, the preamble sequence set comprises at least one preamble sequence and a sequence number of the preamble sequence, the scrambling code set comprises at least one scrambling code, and the second correspondence is used to indicate a correspondence between the scrambling code and the timeslot format; and

the user equipment further comprises:

a selection unit, configured to: select the sequence number from the preamble sequence set, and select a scrambling code from the scrambling code set; and

a scrambling unit, configured to scramble, by using the scrambling code selected by the selection unit, a preamble sequence corresponding to the selected sequence number, wherein

the sending unit is further configured to send, to the base station, a preamble sequence obtained after the scrambling by the scrambling unit;

the receiving unit is further configured to receive an AI sent by the base station; and

the determining unit is further configured to determine the first timeslot format according to the second correspondence when the AI is received from the base station, wherein the first timeslot format is a timeslot format that is in the timeslot format set and corresponding to the selected scrambling code.

25. The user equipment according to any one of claims 22 to 24, wherein the first timeslot format is further used to indicate a quantity of bits that are on the first channel and that the DPCCH transmission information can occupy in one timeslot; and

the DPCCH transmission information comprises a pilot and a transmit power control TPC instruction.

26. The user equipment according to claim 25, wherein the first channel is further used to carry enhanced dedicated physical data channel E-DPDCH transmission information, and the first timeslot format is further used to indicate a quantity of bits that are on the first channel and that the E-DPDCH transmission information can occupy in one timeslot.

27. The user equipment according to claim 25, wherein the first channel is a DPCCH.

28. The user equipment according to claim 19, wherein the E-DPCCH transmission information further comprises a retransmission sequence number RSN.

29. The user equipment according to claim 19 or 20, wherein the encoding unit is further configured to encode the E-DPCCH transmission information by using a Reed-Muller RM encoding mode.

30. A base station, comprising:

a determining unit, configured to determine a first bit quantity, wherein the first bit quantity is a quantity of bits that are on a first channel and that enhanced dedicated physical control channel E-DPCCH transmission information can occupy in one timeslot, the E-DPCCH transmission information comprises a transport format combination indicator E-TFCI, and the first channel is used to carry the E-DPCCH transmission information and dedicated physical control channel DPCCH transmission information;

a receiving unit, configured to receive E-DPCCH encoded bits sent by user equipment through the first channel; and

a decoding unit, configured to decode, according to the first bit quantity that is determined by the determining unit, frame structure information of the first channel, and a second bit quantity, the E-DPCCH encoded bits received by the receiving unit, to obtain the E-DPCCH transmission information, wherein the second bit quantity is a quantity of bits that the E-DPCCH transmission information occupies before the E-DPCCH transmission information is transmitted through an E-DPCCH and before the E-DPCCH transmission information is encoded.

**31.** The base station according to claim 30, further comprising:

a sending unit, configured to send timeslot format information to the user equipment through a broadcast channel, wherein the timeslot format information comprises a timeslot format set, the timeslot format set comprises at least one timeslot format that can be used when user equipment sends E-RACH to the base station through the first channel, the timeslot format is used to indicate the quantity of bits that are on the first channel and that the E-DPCCH transmission information can occupy in one timeslot, and the E-DPCCH transmission information comprises a transport format combination indicator E-TFCI; and

the determining unit is further configured to: determine a first timeslot format from the timeslot format set sent by the sending unit, wherein the first timeslot format is a timeslot format used when the user equipment sends the E-RACH to the base station through the first channel; and determine the first bit quantity according to the first timeslot format.

**32.** The base station according to claim 31, wherein the timeslot format information further comprises a preamble sequence set and a first correspondence, the preamble sequence set comprises at least one preamble sequence and a sequence number of the preamble sequence, and the first correspondence is used to indicate a correspondence between the sequence number and the timeslot format;

the receiving unit is further configured to receive a preamble sequence sent by the user equipment; and

the determining unit is further configured to: when the preamble sequence received by the receiving unit meets a first preset condition, determine, as the first timeslot format according to the first correspondence, a timeslot format that is in the timeslot format set and corresponding to a sequence number of the received preamble sequence, wherein the first preset condition is specifically that the received preamble sequence is not allocated to another user equipment.

**33.** The base station according to claim 31, wherein the timeslot format information further comprises a preamble sequence set, a scrambling code set, and a second correspondence, the preamble sequence set comprises at least one preamble sequence and a sequence number of the preamble sequence, the scrambling code set comprises at least one scrambling code, and the second correspondence is used to indicate a correspondence between the scrambling code and the timeslot format;

the receiving unit is further configured to receive a scrambled preamble sequence sent by the user equipment; and

the base station further comprises:

a descrambling unit, configured to: attempt to descramble the scrambled preamble sequence received by the receiving unit, to obtain a descrambled preamble sequence; and determine a scrambling code for scrambling the preamble sequence, wherein

the determining unit is further configured to: when it is determined, according to the descrambled preamble sequence obtained after the descrambling by the descrambling unit and the scrambling code for scrambling the preamble sequence, that the scrambled preamble sequence meets a second preset condition, determine, as the first timeslot format according to the second correspondence, a timeslot format that is in the timeslot format set and corresponding to the scrambling code for scrambling the preamble sequence, wherein

the second preset condition is specifically that the scrambled preamble sequence is not allocated to another user equipment.

**34.** The base station according to any one of claims 31 to 33, wherein the sending unit is configured to send an acquisition indicator AI to the user equipment after the determining unit determines the first timeslot format from the timeslot format set, wherein the AI is used to instruct the user equipment to send the E-RACH to the base station through the first channel by using the first timeslot format.

**35.** The base station according to claim 30, wherein the decoding unit comprises:

a calculation subunit, configured to calculate a third bit quantity according to the first bit quantity and the frame structure information of the first channel and with reference to a preset quantity of frames, wherein the preset quantity of frames is used to indicate a quantity of frames used to send the E-DPCCH encoded bits through the first channel, the third bit quantity is a quantity of bits that are on the first channel and that the E-DPCCH transmission information can occupy in M frames, M is the preset quantity of frames, and M≥1; and

a decoding subunit, configured to decode, according to the second bit quantity and the third bit quantity obtained after the calculation by the calculation subunit, the E-DPCCH encoded bits received by the receiving unit, to obtain the E-DPCCH transmission information.

**36.** The base station according to claim 30 or 35, wherein the decoding unit is further configured to decode the E-DPCCH encoded bits by using a Reed-Muller RM decoding mode.

E-DPDCH

E-DPCCH

DPCCH

Timeslot 0 | Timeslot 1 | Timeslot 2 | Timeslot i | Timeslot 14

2 milliseconds

Subframe 0 | Subframe 1 | Subframe 2 | Subframe 3 | Subframe 4

One frame
10 milliseconds

FIG. 1

S101

User equipment determines a first bit quantity

S102

The user equipment encodes E-DPCCH transmission information according to a second bit quantity, the first bit quantity, and frame structure information of a first channel, to obtain E-DPCCH encoded bits

S103

The user equipment sends the E-DPCCH encoded bits to a base station through the first channel

FIG. 2

S201

A base station determines a first bit quantity

S202

The base station receives E-DPCCH encoded bits sent by user equipment through a first channel

S203

The base station decodes the E-DPCCH encoded bits according to the first bit quantity, frame structure information of the first channel, and a second bit quantity, to obtain E-DPCCH transmission information

FIG. 3

Base station

User equipment

S301. Send timeslot format information to
user equipment through a broadcast channel

S302a. Select a sequence number
from a preamble sequence set

S302b. Send, to a base station, a preamble sequence
corresponding to the selected sequence number

S302c. When the preamble sequence
meets a first preset condition,
determine, as a first timeslot format
according to a first correspondence, a
timeslot format that is in a timeslot
format set and corresponding to the
sequence number of the received
preamble sequence

S302d. Send an acquisition indicator AI to
the user equipment when the preamble
sequence meets the first preset condition

S302e. Determine the first timeslot
format according to the first
correspondence

S303. Determine a first bit quantity
according to the first timeslot format

S304. Calculate a third bit quantity
according to the first bit quantity and
frame structure information of a
DPCCH and with reference to a preset
quantity of frames

TO
FIG. 4B

TO
FIG. 4B

FIG. 4A

CONT.
FROM
FIG. 4A

CONT.
FROM
FIG. 4A

S305. Encode E-DPCCH
transmission information
according to the third bit quantity
and a second bit quantity, to obtain
E-DPCCH encoded bits

S306. Map the E-DPCCH
encoded bits to each timeslot of M
frames of the DPCCH according
to an encoding sequence

S307. Separately send, to the base station in
each timeslot of the M frames through the
DPCCH, DPCCH transmission information and
E-DPCCH encoded bits mapped in the timeslot

S308. After the DPCCH
transmission information and the E-
DPCCH encoded bits that are sent
by the user equipment through the
DPCCH are received, determine the
first bit quantity according to the
first timeslot format

S309. Calculate the third bit quantity
according to the first bit quantity and
the frame structure information of
the DPCCH and with reference to
the preset quantity of frames

S310. Decode the E-DPCCH
encoded bits according to the third
bit quantity and the second bit
quantity, to obtain the E-DPCCH
transmission information

FIG. 4B

EP 3 176 970 A1

| E-DPDCH | Data |
|---------|------|

| DPCCH | Pilot | E-DPDCH transmission information | TPC |
|-------|-------|--------------------------------|-----|

| Timeslot 0 | Timeslot 1 | Timeslot 2 | | Timeslot i | | Timeslot 14 |

One frame

FIG. 5

| Base station | | User equipment |
|---|---|---|

S301. Send timeslot format information to user equipment through a broadcast channel

S302a'. Select a sequence number from a preamble sequence set, and select a scrambling code from a scrambling code set

S302b'. Scramble, by using the selected scrambling code, a preamble sequence corresponding to the selected sequence number

S302c'. Send a scrambled preamble sequence to a base station

S302d'. Attempt to descramble the received scrambled preamble sequence to obtain a descrambled preamble sequence; and determine the scrambling code for scrambling the preamble sequence

S302e'. When it is determined, according to the descrambled preamble sequence and the scrambling code for scrambling the preamble sequence, that the scrambled preamble sequence meets a second preset condition, determine, as a first timeslot format according to a second correspondence, a timeslot format that is in a timeslot format set and corresponding to the scrambling code for scrambling the preamble sequence

S302f'. When it is determined, according to the descrambled preamble sequence and the scrambling code for scrambling the preamble sequence, that the scrambled preamble sequence meets the second preset condition, send an acquisition indicator AI to the user equipment

S302j'. Determine the first timeslot format according to the second correspondence

TO
FIG. 6B

TO
FIG. 6B

FIG. 6A

CONT.
FROM
FIG. 6A

CONT.
FROM
FIG. 6A

S303. Determine a first bit quantity according to the first timeslot format

S304. Calculate a third bit quantity according to the first bit quantity and frame structure information of a DPCCH and with reference to a preset quantity of frames

S305. Encode E-DPCCH transmission information according to the third bit quantity and a second bit quantity, to obtain E-DPCCH encoded bits

S306. Map the E-DPCCH encoded bits to each timeslot of M frames of the DPCCH according to an encoding sequence

S307. Separately send, to the base station in each timeslot of the M frames through the DPCCH, DPCCH transmission information and E-DPCCH encoded bits mapped in the timeslot

S308. After the DPCCH transmission information and the E-DPCCH encoded bits that are sent by the user equipment through the DPCCH are received, determine the first bit quantity according to the first timeslot format

S309. Calculate the third bit quantity according to the first bit quantity and the frame structure information of the DPCCH and with reference to the preset quantity of frames

S310. Decode the E-DPCCH encoded bits according to the third bit quantity and the second bit quantity, to obtain the E-DPCCH transmission information

FIG. 6B

| Base station | | User equipment |
|---|---|---|

S401. Send timeslot format information to user equipment through a broadcast channel

S402a. Select a sequence number from a preamble sequence set

S402b. Send, to a base station, a preamble sequence corresponding to the selected sequence number

S402c. When the preamble sequence meets a first preset condition, determine, as a first timeslot format according to a first correspondence, a timeslot format that is in a timeslot format set and corresponding to the sequence number of the received preamble sequence

S402d. Send an acquisition indicator AI to the user equipment when the preamble sequence meets the first preset condition

S402e. Determine the first timeslot format according to the first correspondence

S403. Determine a first bit quantity according to the first timeslot format

S404. Calculate a third bit quantity according to the first bit quantity and frame structure information of a first channel and with reference to a preset quantity of frames

TO
FIG. 7B

TO
FIG. 7B

FIG. 7A

CONT.
FROM
FIG. 7A

CONT.
FROM
FIG. 7A

S405. Encode E-DPCCH transmission information according to the third bit quantity and a second bit quantity, to obtain E-DPCCH encoded bits

S406. Map the E-DPCCH encoded bits to each timeslot of M frames of the first channel according to an encoding sequence

S407. Separately send, to the base station in each timeslot of the M frames through the first channel, E-DPDCH transmission information, DPCCH transmission information, and E-DPCCH encoded bits mapped in the timeslot

S408. Determine the first bit quantity according to the first timeslot format after receiving the E-DPDCH transmission information, the DPCCH transmission information, and the E-DPCCH encoded bits that are sent by the user equipment through the first channel

S409. Calculate the third bit quantity according to the first bit quantity and the frame structure information of the first channel and with reference to the preset quantity of frames

S410. Decode the E-DPCCH encoded bits according to the third bit quantity and the second bit quantity, to obtain the E-DPCCH transmission information

FIG. 7B

| Base station | | User equipment |
|---|---|---|

S401. Send timeslot format information to user equipment through a broadcast channel

S402a'. Select a sequence number from a preamble sequence set, and select a scrambling code from a scrambling code set

S402b'. Scramble, by using the selected scrambling code, a preamble sequence corresponding to the selected sequence number

S402c'. Send a scrambled preamble sequence to a base station

S402d'. Attempt to descramble the received scrambled preamble sequence to obtain a descrambled preamble sequence; and determine the scrambling code for scrambling the preamble sequence

S402e'. When it is determined, according to the descrambled preamble sequence and the scrambling code for scrambling the preamble sequence, that the scrambled preamble sequence meets a second preset condition, determine, as a first timeslot format according to a second correspondence, a timeslot format that is in a timeslot format set and corresponding to the scrambling code for scrambling the preamble sequence

S402f'. When it is determined, according to the descrambled preamble sequence and the scrambling code for scrambling the preamble sequence, that the scrambled preamble sequence meets the second preset condition, send an acquisition indicator AI to the user equipment

S402j'. Determine the first timeslot format according to the second correspondence

TO
FIG. 8B

TO
FIG. 8B

FIG. 8A

CONT.
FROM
FIG. 8A

CONT.
FROM
FIG. 8A

S403. Determine a first bit quantity
according to the first timeslot format

S404. Calculate a third bit quantity
according to the first bit quantity and frame
structure information of a first channel and
with reference to a preset quantity of frames

S405. Encode E-DPCCH transmission
information according to the third bit
quantity and a second bit quantity, to obtain
E-DPCCH encoded bits

S406. Map the E-DPCCH encoded bits to
each timeslot of M frames of the first
channel according to an encoding sequence

S407. Separately send, to the base station in each timeslot
of the M frames through the first channel, E-DPDCH
transmission information, DPCCH transmission information,
and E-DPCCH encoded bits mapped in the timeslot

S408. Determine the first bit quantity according
to the first timeslot format after receiving the E-
DPDCH transmission information, the DPCCH
transmission information, and the E-DPCCH
encoded bits that are sent by the user equipment
through the first channel

S409. Calculate the third bit quantity according
to the first bit quantity and the frame structure
information of the first channel and with
reference to the preset quantity of frames

S410. Decode the E-DPCCH encoded bits
according to the third bit quantity and the
second bit quantity, to obtain the E-DPCCH
transmission information

FIG. 8B

First channel

| E-DPDCH transmission information | E-DPCCH transmission information | DPCCH transmission information |
|---|---|---|

| Timeslot 0 | Timeslot 1 | Timeslot 2 | | Timeslot i | | Timeslot 14 |
|---|---|---|---|---|---|---|

One frame

FIG. 9

User equipment

Determining unit 51

Encoding unit 52

Sending unit 53

FIG. 10

User equipment

Determining unit 51

Encoding unit 52

Calculation subunit 521

Encoding subunit 522

Sending unit 53

FIG. 11

User equipment

Determining unit 51

Encoding unit 52

Calculation subunit 521

Encoding subunit 522

Sending unit 53

Mapping unit 54

FIG. 12

User equipment

Determining unit 51

Encoding unit 52

Calculation subunit 521

Encoding subunit 522

Sending unit 53

Mapping unit 54

Receiving unit 55

FIG. 13

User equipment

Determining unit 51

Encoding unit 52

Calculation subunit 521

Encoding subunit 522

Sending unit 53

Mapping unit 54

Receiving unit 55

Selection unit 56

FIG. 14

FIG. 15

FIG. 16

FIG. 17

Base station

Determining unit 71

Receiving unit 72

Decoding unit 73

FIG. 18

Base station

Determining unit 71

Receiving unit 72

Decoding unit 73

Sending unit 74

FIG. 19

Base station

Determining unit 71

Receiving unit 72

Decoding unit 73

Sending unit 74

Descrambling unit 75

FIG. 20

Base station

Determining unit 71

Receiving unit 72

Decoding unit 73

Calculation subunit 731

Encoding subunit 732

Sending unit 74

Descrambling unit 75

FIG. 21

Base station

81

Processor

84

Memory

Receiver

82

FIG. 22

Base station

81

Processor

84

Memory

Transmitter

83

Receiver

82

FIG. 23

FIG. 24

| INTERNATIONAL SEARCH REPORT | International application No. |
|---|---|
| | PCT/CN2015/073057 |

**A. CLASSIFICATION OF SUBJECT MATTER**

H04L 1/00 (2006.01) i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CPRSABS, CNTXT, CNKI, VEN: enhance, dedicated physical control channel, E-DPCCH, DPCCH, TFCI, transmission, encode, coding, time slot, frame, bit, overhead

**C. DOCUMENTS CONSIDERED TO BE RELEVANT**

| Category* | Citation of document, with indication, where appropriate, of the relevant passages | Relevant to claim No. |
|---|---|---|
| A | CN 1774122 A (HUAWEI TECHNOLOGIES CO., LTD.), 17 May 2006 (17.05.2006), the whole document | 1-36 |
| A | CN 102594521 A (HUAWEI TECHNOLOGIES CO., LTD.), 18 July 2012 (18.07.2012), the whole document | 1-36 |
| A | CN 103905164 A (ZTE CORP.), 02 July 2014 (02.07.2014), the whole document | 1-36 |
| A | US 2010087202 A1 (NOKIA CORP.), 08 April 2010 (08.04.2010), the whole document | 1-36 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 May 2015 (12.05.2015) | 27 May 2015 (27.05.2015) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer LI, Yanxin Telephone No.: (86-10) 62089375 |
|---|---|

Form PCT/ISA/210 (second sheet) (July 2009)

## INTERNATIONAL SEARCH REPORT
Information on patent family members

International application No.

**PCT/CN2015/073057**

| Patent Documents referred in the Report | Publication Date | Patent Family | Publication Date |
|---|---|---|---|
| CN 1774122 A | 17 May 2006 | CN 100461935 C | 11 February 2009 |
| CN 102594521 A | 18 July 2012 | None | |
| CN 103905164 A | 02 July 2014 | WO 2014101465 A1 | 03 July 2014 |
| US 2010087202 A1 | 08 April 2010 | US 8868121 B2 | 21 October 2014 |

Form PCT/ISA/210 (patent family annex) (July 2009)

**REFERENCES CITED IN THE DESCRIPTION**

**Patent documents cited in the description**

• CN 201410429018